# EUROPEAN PATENT APPLICATION

(11) **EP 4 307 728 A1**
(43) Date of publication of application: **17.01.2024**
(21) Application number: 22790800.1
(22) Date of filing: 26.03.2022
(51) Int. Cl.: H04W 4/16

(54) **CALL PROCESSING METHOD AND RELATED DEVICE**

(30) Priority: 22.04.2021 CN 202110437393
(71) Applicant: Huawei Technologies Co., Ltd., Shenzhen, Guangdong 518129 (CN)
(72) Inventor: HSU, Chih Hsin, Shenzhen, Guangdong 518129 (CN); SHU, Haw-wei, Shenzhen, Guangdong 518129 (CN); JIA, Yinyuan, Shenzhen, Guangdong 518129 (CN); WANG, Zhifeng, Shenzhen, Guangdong 518129 (CN)
(74) Representative: MERH-IP Matias Erny Reichl Hoffmann Patentanwälte PartG mbB
(86) International application number: PCT/CN2022/083233
(87) International publication number: WO 2022/222691

(57) **Abstract**

Embodiments of this application provide a call processing method and a related device. The method may be applied to a first electronic device, and the method includes: establishing a first communication link to a second electronic device; transmitting call data between the first electronic device and the second electronic device through the first communication link; displaying a first prompt region, where the first prompt region is used to indicate a call request of a third electronic device; receiving a first operation instruction that is input for the call request; establishing a second communication link to the third electronic device according to the first operation instruction; and transmitting call data between the first electronic device and the third electronic device through the second communication link, and retaining the first communication link in a state of transmitting call data between the first electronic device and the second electronic device. In the method, the first electronic device can simultaneously answer a plurality of calls without playing a ring back tone. This greatly improves user experience.

## Description

This application claims priority to Chinese Patent Application No. 202110437393.2, filed with the China National Intellectual Property Administration on April 22, 2021 and entitled "CALL PROCESSING METHOD AND RELATED DEVICE", which is incorporated herein by reference in its entirety.

### TECHNICAL FIELD

This application relates to the call processing field, and in particular, to a call processing method and a related device.

### BACKGROUND

When a user uses an electronic device (for example, a mobile phone) to perform a unidirectional or bidirectional call, if a new call comes in, in one case, the electronic device may not be able to answer the new call, that is, the electronic device cannot support two calls. In another case, the user may answer the new call by using the electronic device. However, when the user uses the electronic device to answer the new call, the user still holds the original call. This may also be understood as that the original call is in a buffering state, and the user is one of buffering parties of the original call. In this case, a ring back tone is played for the other buffering party of the original call, and the ring back tone is used to indicate that the user is answering the new call. This affects user experience of the other buffering party of the original call.

Therefore, how to simultaneously answer a plurality of incoming calls without affecting user experience is an issue that urgently needs to be addressed currently.

### SUMMARY

This application provides a call processing method and a related device, to answer a plurality of calls on a same device without a ring back tone by changing a sending/receiving attribute of an electronic device, or transfer one or more of a plurality of calls to another electronic device for answering, so that a plurality of calls can be simultaneously answered on different devices, and a peer end of a call is not affected by a ring back tone in this process.

According to a first aspect, this application provides a call processing method, applied to a first electronic device. The method may include: establishing a first communication link to a second electronic device; transmitting call data between the first electronic device and the second electronic device through the first communication link; displaying a first prompt region, where the first prompt region is used to indicate a call request of a third electronic device; receiving a first operation instruction that is input for the call request; establishing a second communication link to the third electronic device according to the first operation instruction; and transmitting call data between the first electronic device and the third electronic device through the second communication link, and retaining the first communication link in a state of transmitting call data between the first electronic device and the second electronic device.

In the solution provided in this application, the first electronic device may simultaneously answer a plurality of calls. Specifically, the first electronic device may normally answer one of the calls, and hold another call by sending unwanted data (a silence frame, RTCP data, or the like) to a peer end of the another call or in another manner, so that no ring back tone is played for the peer end of the another call, and user experience is improved. Alternatively, the first electronic device may transfer at least one of the plurality of calls to another electronic device for answering. In this case, no ring back tone is played for peer ends of the calls, and all the calls can be normally answered. This avoids a case that a call cannot be normally answered when a plurality of emergency calls need to be simultaneously answered.

With reference to the first aspect, in a possible implementation of the first aspect, after the establishing a second communication link to the third electronic device according to the first operation instruction, the method further includes: displaying a second prompt region, where the second prompt region is used to indicate a call switching request; receiving a second operation instruction that is input for the call switching request; and according to the second operation instruction, transmitting call data between the first electronic device and the second electronic device through the first communication link, and retaining the second communication link in a state of transmitting call data between the first electronic device and the third electronic device.

In the solution provided in this application, when a plurality of calls are simultaneously answered on the first electronic device, because crosstalk and other problems need to be avoided, usually, only one call is normally answered. In this case, unwanted data may be sent to a peer end of another call, so that no ring back tone is played for the peer end of the another call. This avoids interference of a ring back tone to a user. In an actual case, a call that is normally answered on the first electronic device may be switched. To be specific, when another call needs to be normally answered, the first electronic device can also smoothly perform switching, so that user experience is improved.

With reference to the first aspect, in a possible implementation of the first aspect, after the establishing a second communication link to the third electronic device, the method further includes: displaying a third prompt region, where the third prompt region is used to indicate a request for switching a call answering mode; receiving a third operation instruction that is input for the request for switching a call answering mode; and when a communication connection to a fourth electronic device is established, according to the third operation instruction, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; or when a communication connection to a fourth electronic device is established, according to the third operation instruction, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

In the solution provided in this application, a plurality of calls may be answered on the first electronic device, or one or more of the plurality of calls may be transferred to another device for answering. Switching may be performed between the two answering modes according to an actual requirement. This better meets a requirement of a user for answering a plurality of calls without impact of a ring back tone, and improves user experience.

With reference to the first aspect, in a possible implementation of the first aspect, the transmitting call data between the first electronic device and the third electronic device through the second communication link, and retaining the first communication link in a state of transmitting call data between the first electronic device and the second electronic device includes: when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; and when a communication connection to a fifth electronic device is established, receiving, through the second communication link, call data sent by the third electronic device, sending, to the fifth electronic device, the call data sent by the third electronic device, receiving call data sent by the fifth electronic device, and sending, to the third electronic device through the second communication link, the call data sent by the fifth electronic device; or when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device; and when a communication connection to a fifth electronic device is established, receiving, through the first communication link, call data sent by the second electronic device, sending, to the fifth electronic device, the call data sent by the second electronic device, receiving call data sent by the fifth electronic device, and sending, to the second electronic device through the first communication link, the call data sent by the fifth electronic device.

In the solution provided in this application, when the first electronic device needs to answer a plurality of calls, the first electronic device may transfer all the plurality of calls to another device for answering. For example, a MIC (microphone) or a speaker (speaker) of the first electronic device is damaged, and no call can be normally answered on the first electronic device. In this case, the plurality of calls on the first electronic device may be transferred to another device for answering, so that the plurality of calls can be normally answered without interference of a ring back tone, and user experience is improved.

With reference to the first aspect, in a possible implementation of the first aspect, the retaining the first communication link in a state of transmitting call data between the first electronic device and the second electronic device includes: when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device.

In the solution provided in this application, when the first electronic device needs to answer a plurality of calls, the first electronic device may transfer at least one of the plurality of calls to another device for answering, and the another device needs to establish a communication connection to the first electronic device. In this call processing mode, the plurality of calls can be simultaneously answered. For example, the first electronic device answers a call between the first electronic device and the third electronic device, and transfers a call between the first electronic device and the second electronic device to the fourth electronic device for answering, so that both a first call and a second call can be normally answered, and user experience is greatly improved.

With reference to the first aspect, in a possible implementation of the first aspect, the transmitting call data between the first electronic device and the third electronic device through the second communication link includes: when a communication connection to a fifth electronic device is established, receiving, through the second communication link, call data sent by the third electronic device, sending, to the fifth electronic device, the call data sent by the third electronic device, receiving call data sent by the fifth electronic device, and sending, to the third electronic device through the second communication link, the call data sent by the fifth electronic device.

In the solution provided in this application, when the first electronic device simultaneously answers a plurality of calls, the first electronic device may transfer at least one of the plurality of calls to another device for answering, and may also transfer another untransferred call to another device for answering as needed in a subsequent call process, so that solutions for answering a plurality of calls are more diverse and more flexible, and user experience is improved.

With reference to the first aspect, in a possible implementation of the first aspect, the transmitting call data between the first electronic device and the third electronic device through the second communication link includes: when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

In the solution provided in this application, when the first electronic device needs to answer a plurality of calls, the first electronic device may transfer at least one of the plurality of calls to another device for answering, and the another device needs to establish a communication connection to the first electronic device. In this call processing mode, the plurality of calls can be simultaneously answered. For example, the first electronic device answers a call between the first electronic device and the second electronic device, and transfers a call between the first electronic device and the third electronic device to the fourth electronic device for answering, so that both a first call and a second call can be normally answered, and user experience is greatly improved.

With reference to the first aspect, in a possible implementation of the first aspect, when a communication connection to a fifth electronic device is established, call data sent by the second electronic device is received through the first communication link, the call data sent by the second electronic device is sent to the fifth electronic device, call data sent by the fifth electronic device is received, and the call data sent by the fifth electronic device is sent to the second electronic device through the first communication link.

In the solution provided in this application, when the first electronic device simultaneously answers a plurality of calls, the first electronic device may transfer at least one of the plurality of calls to another device for answering, and may also transfer another untransferred call to another device for answering as needed in a subsequent call process, so that solutions for answering a plurality of calls are more diverse and more flexible, and user experience is improved.

With reference to the first aspect, in a possible implementation of the first aspect, after the sending, to the second electronic device through the first communication link, the call data sent by the fourth electronic device, the method further includes: displaying a fourth prompt region, where the fourth prompt region is used to indicate a call switching request; receiving a fourth operation instruction that is input for the call switching request; and in response to the fourth operation instruction, switching and sending, to the third electronic device through the second communication link, the call data sent by the fourth electronic device, stopping sending, to the fourth electronic device, the call data sent by the second electronic device, and sending, to the fourth electronic device, the call data that is sent by the third electronic device and that is received through the second communication link.

In the solution provided in this application, when at least one call on the first electronic device is transferred to the fourth electronic device for answering, a call may be switched between the first electronic device and the fourth electronic device according to an actual requirement. For example, when the first electronic device transfers a first call (a call between the first electronic device and the second electronic device) to the fourth electronic device for answering, but the first call needs to obtain video data and the fourth electronic device cannot display video data (for example, the fourth electronic device is a device without a display, such as a headset), the fourth electronic device cannot meet a requirement of the call. Therefore, the call may be switched to the first electronic device for answering. This better meets a user requirement and improves user experience.

With reference to the first aspect, in a possible implementation of the first aspect, after the sending, to the third electronic device through the second communication link, the call data sent by the fourth electronic device, the method further includes: displaying a fourth prompt region, where the fourth prompt region is used to indicate a call switching request; receiving a fourth operation instruction that is input for the call switching request; and in response to the fourth operation instruction, switching and sending, to the second electronic device through the first communication link, the call data sent by the fourth electronic device, stopping sending, to the fourth electronic device, the call data sent by the third electronic device, and sending, to the fourth electronic device, the call data that is sent by the second electronic device and that is received through the first communication link.

In the solution provided in this application, when at least one call on the first electronic device is transferred to the fourth electronic device for answering, a call may be switched between the first electronic device and the fourth electronic device according to an actual requirement. For example, when the first electronic device transfers a second call (a call between the first electronic device and the third electronic device) to the fourth electronic device for answering, but the first call needs to obtain video data and the fourth electronic device cannot display video data (for example, the fourth electronic device is a device without a display, such as a headset), the fourth electronic device cannot meet a requirement of the call. Therefore, the call may be switched to the first electronic device for answering. This better meets a user requirement and improves user experience.

With reference to the first aspect, in a possible implementation of the first aspect, the method further includes: determining, based on a preset priority from at least one electronic device that establishes a communication connection to the first electronic device, an electronic device with a highest priority as the fourth electronic device.

In the solution provided in this application, the fourth electronic device may be determined based on the preset priority, so that time for selecting the fourth electronic device by a user is reduced, and user experience is improved.

With reference to the first aspect, in a possible implementation of the first aspect, the first communication link is used to implement a call performed through an operator, and the second communication link is used to implement a call performed through a third-party application; or the first communication link is used to implement a call performed through a third-party application, and the second communication link is used to implement a call performed through an operator.

In the solution provided in this application, when the first electronic device needs to simultaneously answer two calls, one of the two calls may be a call implemented by an operator (an operator call), and the other may be a call implemented by a third-party application (a third-party call). This is because a new communication kit module implements coordination between the operator call and the third-party call, so that the operator call and the third-party call are no longer performed independently. In this way, more scenarios are extended, so that the call processing method can be utilized to a maximum extent, and user experience is also greatly improved.

According to a second aspect, this application provides an electronic device. The electronic device includes a memory and one or more processors. The memory is coupled to the one or more processors. The memory is configured to store computer program code. The computer program code includes computer instructions. The one or more processors are configured to invoke the computer instructions, so that the electronic device performs the following operations: establishing a first communication link to a second electronic device; transmitting call data between the electronic device and the second electronic device through the first communication link; displaying a first prompt region, where the first prompt region is used to indicate a call request of a third electronic device; receiving a first operation instruction that is input for the call request; establishing a second communication link to the third electronic device according to the first operation instruction; and transmitting call data between the electronic device and the third electronic device through the second communication link, and retaining the first communication link in a state of transmitting call data between the electronic device and the second electronic device.

With reference to the second aspect, in a possible implementation of the second aspect, after the one or more processors are configured to invoke the computer instructions to enable the electronic device to perform the operation of establishing a second communication link to the third electronic device according to the first operation instruction, the one or more processors are further configured to invoke the computer instructions to enable the electronic device to perform the following operations: displaying a second prompt region, where the second prompt region is used to indicate a call switching request; receiving a second operation instruction that is input for the call switching request; and according to the second operation instruction, transmitting call data between the electronic device and the second electronic device through the first communication link, and retaining the second communication link in a state of transmitting call data between the electronic device and the third electronic device.

With reference to the second aspect, in a possible implementation of the second aspect, after the one or more processors are configured to invoke the computer instructions to enable the electronic device to perform the operation of establishing a second communication link to the third electronic device according to the first operation instruction, the one or more processors are further configured to invoke the computer instructions to enable the electronic device to perform the following operations: displaying a third prompt region, where the third prompt region is used to indicate a request for switching a call answering mode; receiving a third operation instruction that is input for the request for switching a call answering mode; and when a communication connection to a fourth electronic device is established, according to the third operation instruction, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; or when a communication connection to a fourth electronic device is established, according to the third operation instruction, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

With reference to the second aspect, in a possible implementation of the second aspect, when the one or more processors are configured to invoke the computer instructions to enable the electronic device to perform the operation of transmitting call data between the electronic device and the third electronic device through the second communication link, and retaining the first communication link in a state of transmitting call data between the electronic device and the second electronic device, the one or more processors are specifically configured to invoke the computer instructions to enable the electronic device to perform the following operations: when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; and when a communication connection to a fifth electronic device is established, receiving, through the second communication link, call data sent by the third electronic device, sending, to the fifth electronic device, the call data sent by the third electronic device, receiving call data sent by the fifth electronic device, and sending, to the third electronic device through the second communication link, the call data sent by the fifth electronic device; or when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device; and when a communication connection to a fifth electronic device is established, receiving, through the first communication link, call data sent by the second electronic device, sending, to the fifth electronic device, the call data sent by the second electronic device, receiving call data sent by the fifth electronic device, and sending, to the second electronic device through the first communication link, the call data sent by the fifth electronic device.

With reference to the second aspect, in a possible implementation of the second aspect, when the one or more processors are configured to invoke the computer instructions to enable the electronic device to perform the operation of retaining the first communication link in a state of transmitting call data between the electronic device and the second electronic device, the one or more processors are specifically configured to invoke the computer instructions to enable the electronic device to perform the following operations: when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device.

With reference to the second aspect, in a possible implementation of the second aspect, when the one or more processors are configured to invoke the computer instructions to enable the electronic device to perform the operation of transmitting call data between the electronic device and the third electronic device through the second communication link, the one or more processors are specifically configured to invoke the computer instructions to enable the electronic device to perform the following operations: when a communication connection to a fifth electronic device is established, receiving, through the second communication link, call data sent by the third electronic device, sending, to the fifth electronic device, the call data sent by the third electronic device, receiving call data sent by the fifth electronic device, and sending, to the third electronic device through the second communication link, the call data sent by the fifth electronic device.

With reference to the second aspect, in a possible implementation of the second aspect, when the one or more processors are configured to invoke the computer instructions to enable the electronic device to perform the operation of transmitting call data between the electronic device and the third electronic device through the second communication link, the one or more processors are specifically configured to invoke the computer instructions to enable the electronic device to perform the following operations: when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

With reference to the second aspect, in a possible implementation of the second aspect, when the one or more processors are configured to invoke the computer instructions to enable the electronic device to perform the operation of retaining the first communication link in a state of transmitting call data between the electronic device and the second electronic device, the one or more processors are specifically configured to invoke the computer instructions to enable the electronic device to perform the following operations: when a communication connection to a fifth electronic device is established, receiving, through the first communication link, call data sent by the second electronic device, sending, to the fifth electronic device, the call data sent by the second electronic device, receiving call data sent by the fifth electronic device, and sending, to the second electronic device through the first communication link, the call data sent by the fifth electronic device.

With reference to the second aspect, in a possible implementation of the second aspect, after the one or more processors are configured to invoke the computer instructions to enable the electronic device to perform the operation of sending, to the second electronic device through the first communication link, the call data sent by the fourth electronic device, the one or more processors are further configured to invoke the computer instructions to enable the electronic device to perform the following operations: displaying a fourth prompt region, where the fourth prompt region is used to indicate a call switching request; receiving a fourth operation instruction that is input for the call switching request; and in response to the fourth operation instruction, switching and sending, to the third electronic device through the second communication link, the call data sent by the fourth electronic device, stopping sending, to the fourth electronic device, the call data sent by the second electronic device, and sending, to the fourth electronic device, the call data that is sent by the third electronic device and that is received through the second communication link.

With reference to the second aspect, in a possible implementation of the second aspect, after the one or more processors are configured to invoke the computer instructions to enable the electronic device to perform the operation of sending, to the third electronic device through the second communication link, the call data sent by the fourth electronic device, the one or more processors are further configured to invoke the computer instructions to enable the electronic device to perform the following operations: displaying a fourth prompt region, where the fourth prompt region is used to indicate a call switching request; receiving a fourth operation instruction that is input for the call switching request; and in response to the fourth operation instruction, switching and sending, to the second electronic device through the first communication link, the call data sent by the fourth electronic device, stopping sending, to the fourth electronic device, the call data sent by the third electronic device, and sending, to the fourth electronic device, the call data that is sent by the second electronic device and that is received through the first communication link. With reference to the second aspect, in a possible implementation of the second aspect, the one or more processors are further configured to invoke the computer instructions to enable the electronic device to perform the following operation: determining, based on a preset priority from at least one electronic device that establishes a communication connection to the first electronic device, an electronic device with a highest priority as the fourth electronic device.

With reference to the second aspect, in a possible implementation of the second aspect, the first communication link is used to implement a call performed through an operator, and the second communication link is used to implement a call performed through a third-party application; or the first communication link is used to implement a call performed through a third-party application, and the second communication link is used to implement a call performed through an operator.

According to a third aspect, an embodiment of this application provides a computer program product including instructions. When the computer program product runs on an electronic device, the electronic device is enabled to perform the call processing method described in any one of the first aspect or the implementations of the first aspect.

According to a fourth aspect, an embodiment of this application provides a computer-readable storage medium. The computer-readable storage medium stores a computer program. When the computer program runs on an electronic device, the electronic device is enabled to perform the call processing method described in any one of the first aspect or the implementations of the first aspect.

According to a fifth aspect, an embodiment of this application provides a chip. The chip is applied to an electronic device. The chip includes one or more processors. The processor is configured to invoke computer instructions, so that the electronic device performs the call processing method described in any one of the first aspect or the implementations of the first aspect.

According to a sixth aspect, this application provides a chip system. The chip system is applied to an electronic device, and is configured to enable the electronic device to implement the functions in the first aspect, for example, generating or processing the information in the call processing method described in the first aspect. In a possible design, the chip system further includes a memory. The memory is configured to store program instructions and data that are necessary for a data sending device. The chip system may include a chip, or may include a chip and another discrete component.

It can be understood that the electronic device provided in the second aspect, the computer program product including instructions provided in the third aspect, the computer-readable storage medium provided in the fourth aspect, the chip provided in the fifth aspect, and the chip system provided in the sixth aspect are all configured to perform the call processing method provided in the first aspect. Therefore, for beneficial effect that can be achieved, refer to the beneficial effect in the call processing method provided in the first aspect. Details are not described herein again.

### BRIEF DESCRIPTION OF DRAWINGS

FIG. 1 is a schematic diagram of a hardware structure of an electronic device 100 according to an embodiment of this application;
FIG. 2 is a schematic diagram of a software structure of an electronic device 100 according to an embodiment of this application;
FIG. 3 is a schematic diagram of a call processing system according to an embodiment of this application;
FIG. 4 is a flowchart of a call processing method according to an embodiment of this application;
FIG. 5 is a schematic diagram of a first prompt region according to an embodiment of this application;
FIG. 6 is a schematic diagram of another first prompt region according to an embodiment of this application;
FIG. 7 is a schematic diagram of another first prompt region according to an embodiment of this application;
FIG. 8A and FIG. 8B are a flowchart of another call processing method according to an embodiment of this application;
FIG. 9 is a schematic diagram of answering a plurality of calls by a single device according to an embodiment of this application;
FIG. 10 is a schematic diagram of a second prompt region according to an embodiment of this application;
FIG. 11 is a schematic diagram of a third prompt region according to an embodiment of this application;
FIG. 12 is a schematic diagram of another third prompt region according to an embodiment of this application;
FIG. 13 is a flowchart of another call processing method according to an embodiment of this application;
FIG. 14 is a schematic diagram of answering a plurality of calls by a plurality of devices according to an embodiment of this application;
FIG. 15 is another schematic diagram of answering a plurality of calls by a plurality of devices according to an embodiment of this application;
FIG. 16 is a diagram of a principle of answering a plurality of calls by a plurality of devices according to an embodiment of this application;
FIG. 17A and FIG. 17B are a schematic diagram of a downlink data stream of an operator call according to an embodiment of this application;
FIG. 18A and FIG. 18B are a schematic diagram of an uplink data stream of an operator call according to an embodiment of this application;
FIG. 19A and FIG. 19B are a schematic diagram of a downlink data stream of a third-party call according to an embodiment of this application;
FIG. 20A and FIG. 20B are a schematic diagram of an uplink data stream of a third-party call according to an embodiment of this application;
FIG. 21A is a schematic diagram of answering a plurality of calls by a plurality of devices according to an embodiment of this application;
FIG. 21B is another schematic diagram of answering a plurality of calls by a plurality of devices according to an embodiment of this application;
FIG. 22 is a schematic diagram of a fourth prompt region according to an embodiment of this application;
FIG. 23 is a schematic diagram of a user interface according to an embodiment of this application;
FIG. 24 is a schematic diagram of another user interface according to an embodiment of this application;
FIG. 25 is a schematic diagram of another user interface according to an embodiment of this application;
FIG. 26 is a schematic diagram of another user interface according to an embodiment of this application;
FIG. 27 is a schematic diagram of another user interface according to an embodiment of this application;
FIG. 28 is a schematic diagram of another user interface according to an embodiment of this application;
FIG. 29 is a diagram of a principle of simultaneously answering two calls according to an embodiment of this application; and
FIG. 30 is a diagram of another principle of simultaneously answering two calls according to an embodiment of this application.

### DESCRIPTION OF EMBODIMENTS

The following clearly and completely describes technical solutions in embodiments of this application with reference to accompanying drawings. Clearly, the described embodiments are merely some but not all embodiments of this application. All other embodiments obtained by a person of ordinary skill in the art based on embodiments of this application without creative efforts shall fall within the protection scope of this application.

Some terms and related technologies in this application are first described, to facilitate understanding by a person skilled in the art.

IP is short for Internet Protocol (Internet Protocol) and is a network layer protocol in a TCP/IP system. An objective of designing the IP is to improve network scalability: address Internet issues to implement large-scale heterogeneous interconnection and interworking; and decouple top-layer network applications from underlying network technologies to facilitate their independent development.

The IP is a core of a TCP/IP protocol family and also a basis of the Internet. The IP is at a network layer of a TCP/IP model (equivalent to a network layer of an OSI model). The IP may provide a transport layer with information of various protocols, such as the TCP and the UDP. In downlink, IP information packets may be placed at a link layer and transmitted through various technologies such as Ethernet and a token ring network.

IMS (IP Multimedia Subsystem) is short for IP multimedia subsystem. The IMS is a new multimedia service form, and can meet a requirement of end users for more innovative and more diverse multimedia services. The IMS is recognized as a core technology of a next-generation network, and is also an important means of implementing fixed-mobile convergence and introducing differentiated services such as voice-data-video convergence. Currently, an IMS network is mature and is supported by most operators.

The session initiation protocol (Session Initiation Protocol, SIP) is a multimedia communication protocol developed by the IETF (Internet Engineering Task Force, Internet Engineering Task Force). The SIP is an application-layer signaling control protocol for creating, modifying, or releasing sessions with one or more participants. The sessions may be IMS calls, for example, VoLTE, ViLTE, VoWiFi, ViWiFi, VoNR, EPSFallback, RCS, or VoIP (voice over IP). It can be understood that the SIP is an IP voice session control protocol originating from the Internet, and is characterized by flexibility, ease of implementation, and ease of extension.

With development of computer science and technologies, an IP data network based on a packet switching technology, with convenience and low costs, has taken a core position in the communication field in replacement of a conventional circuit switching-based telephone network. As an application-layer signaling control protocol, the SIP protocol provides complete session creation and session modification services for a plurality of instant messaging services. Therefore, security of the SIP protocol plays an important role in security of instant messaging.

The SIP is used to establish and release sessions. Generally, a session includes related media, such as a video and audio. Media data is described by the SDP Usually, the SDP is not used alone. When the SDP is used with the SIP, the SDP is included in text of the SIP protocol. During establishment of a session, media negotiation needs to be performed, so that both parties can determine a media capability of each other and exchange media data. (This is work of the SDP.)

A ring back tone is specific sound that a calling party hears and that indicates a wait for a called party to answer when a called terminal rings after a call is initiated. In addition, when a peer end holds (HOLD) a call, voice similar to "Sorry, the subscriber you dialed is busy now, please hold on" received by a local end is also a ring back tone delivered by a network. The ring back tone is usually a standard audio signal, or may be a special voice file, for example, music, specified by a called user. In a PSTN, a ring back tone is usually generated by a local switch of a called party, and then transmitted to a calling phone through an established unidirectional speech channel, and the calling phone plays the ring back tone to a calling party.

OTT (Over The Top) in the communication field means that an Internet company develops various video and data services based on the open Internet without participation of an operator.

Wireless AP (Access Point): a wireless access point that serves as a wireless switch on a wireless network and also a core of the wireless network. The wireless AP is an access point for a mobile computer user to access a wired network, and is mainly used in a broadband home, a building, or a campus, and may cover tens of meters to hundreds of meters. A wireless AP (also referred to as a session point or an access bridge) is a broad name that not only includes a simple wireless access point (wireless AP) but also is a collective term for a wireless router (including a wireless gateway and a wireless bridge) and similar devices.

A modem (Modem), short for modulator (modulator) and demodulator (demodulator), is a type of computer hardware that can translate digital signals of a computer into pulse signals that can be transmitted over a common telephone line. Then the pulse signals can be received by another modem on the other end of the line and translated into a language that can be understood by a computer. That is, a digital signal to be transmitted may be modulated onto a carrier, or a digital signal may be separated from a carrier. The modem is mainly used for data communication on a telephone network and plays an important role in network interconnection and remote access.

Information on a computer is digital signals including "0" and " 1 ", but only analog electrical signals can be transmitted over a telephone line. Therefore, when two computers need to transmit data over a telephone line, a device needs to be used to perform digital-to-analog conversion.

Modulation is to convert a digital signal into an analog signal to be transmitted over a telephone line. Demodulation is to convert an analog signal into a digital signal. The modulation and the demodulation are collectively referred to as a modem. The modem converts a digital signal into an analog signal through modulation at a transmit end, and converts an analog signal into a digital signal through demodulation at a receive end.

When a computer sends data, a modem first converts a digital signal into an analog signal. This process is referred to as "modulation". Before a modulated signal is transmitted to another computer through a telephone carrier, a modem of a receiver needs to restore the analog signal into a digital signal that can be recognized by the computer. This process is referred to as "demodulation". This digital-to-analog conversion process of "modulation" and "demodulation" implements remote communication between two computers.

Hi-Fi is short for High Fidelity, and is defined as replayed sound highly similar to raw sound. In this application, a Hi-Fi module is configured to perform audio related processing. Similarly, an audio digital signal processing (Audio Digital Signal Processing, ADSP) module may alternatively be used to perform audio related processing.

For an RDMA-aware network interface controller (RDMA-aware Network Interface Controller, RNIC), neither a host processor of a destination device nor a host processor of a source device performs data transmission operations. The RNIC network interface card generates remote direct memory access (Remote Direct Memory Access, RDMA) data packets and receives input RDMA data packets, to eliminate redundant memory replication operations in conventional operations. In this way, network interface card data of the AP or modem is quickly migrated.

An IP filter (usually referred to as an IPF) is an open-source software package that provides firewall services and network address translation (NAT) for many Unix-like operating systems. Main functions of the IP filter are to filter uplink and downlink IP data packets and transfer inter-kernel DMA (Direct Memory Access, direct memory access).

A SIM (Subscriber Identity Module) card is an IC card own by a mobile subscriber in a communication system such as GSM, CDMA, UMTS, LTE, or NR, and is referred to as a subscriber identity card. These communication systems identify users based on SIM cards. SIMs are classified into a uSIM, an iSIM, and an eSIM.

A mobile phone and a SIM card constitute a mobile communication terminal device. Regardless of being in a GSM system or another communication system such as CDMA, a digital mobile phone user obtains a SIM card when "registering with a network". The SIM card is also referred to as a smart card or a subscriber identity card. A digital mobile phone can be used only after it is equipped with a SIM card. The SIM card is a card including a large-scale integrated circuit. The card stores information about a digital mobile phone user, an encryption key, and other content. The SIM card may be used by a network to authenticate a user identity and encrypt voice information of a user during a call. The use of the SIM card completely prevents parallel operation and call eavesdropping. In addition, the SIM card is manufactured in strict compliance with international standards and specifications, and ensures reliability of normal communication of users. If no SIM card is installed, only emergency calls such as 119 and 112 can be made. Application of a SIM card in a system separates a card from a mobile phone. One SIM card uniquely identifies one user. A SIM card may be inserted into any mobile phone for use. Communication fees generated by using the mobile phone are automatically recorded in an account of a user that is uniquely identified by the SIM card.

A universal subscriber identity module manager (Universal Subscriber Identity Module Manager, USIMM) is configured to manage read and write operations of a SIM.

The real-time transport protocol (Real-time Transport Protocol, RTP for short, which may also be written as RTTP) is a network transmission protocol. The RTP protocol describes in detail a standard data packet format for transmitting audio and videos on the Internet. The RTP protocol is initially designed as a multicast protocol, but is subsequently used in many unicast applications. The RTP protocol is commonly used in a streaming system (used with the RTCP), video conferences, and a push to talk (Push to Talk) system (used with H.323 or the SIP), making it a technical foundation of the IP phone industry. The RTP protocol is used with the RTP control protocol RTCP, and is established based on the user datagram protocol.

The RTP does not provide an on-time sending mechanism or other quality of service (QoS) guarantee, and relies on underlying services to implement this process. The RTP does not guarantee transmission or prevent unordered transmission, and does not determine reliability of an underlying network either. The RTP implements ordered transmission. Sequence numbers in the RTP allow a receiver to re-organize a packet sequence of a sender. In addition, a sequence number can also be used to determine a proper packet location. For example, in video decoding, decoding does not need to be performed in sequence.

An RTP standard defines two sub-protocols: the RTP and the RTCP.

The data transmission protocol RTP is used to transmit data in real time. Information provided in the protocol includes a timestamp (for synchronization), a sequence number (for packet loss and reordering detection), and a payload format (for describing an encoding format of data).

The control protocol RTCP is used to feed back QoS and synchronize media streams. To be specific, the RTCP is used to monitor quality of service and transmit information about a participant of an ongoing session. Compared with the RTP, the RTCP occupies quite low bandwidth, usually only 5%. The function of the RTCP in the latter aspect is sufficient for "loosely controlled" sessions. To be specific, the RTCP is not necessarily used to support all control communication requests of an application when there is no explicit membership control or organization.

Quality of service (Quality of Service, QoS) means that a network can use various basic technologies to provide better service capabilities for specified network communication, is a network security mechanism, and is a technology for resolving network delay and congestion problems and the like. QoS guarantee is quite important for a network with a limited capacity, especially for streaming multimedia applications such as VoIP and IPTV These applications usually need to use a fixed transmission rate and therefore are sensitive to delays.

Adaptive multi-rate (Adaptive Multi-Rate, AMR) coding is mainly used for audio of mobile devices, has a high compression ratio, but has poorer quality compared with other compression formats. The AMR is mainly used for human voice and calls, and therefore achieves quite good effect. It should be noted that the AMR includes AMR-NB and AMR-WB, and is a type of speech coding and is adaptive multi-rate coding. Corresponding speech coding further includes EVS, Opus, G711, G722, and SLIK. Alternatively, a raw PCM speech bitstream is used for transmission.

TC is short for Telephony Call and indicates an operator call.

Voice over Internet Protocol (Voice over Internet Protocol, VoIP) is a voice call technology that implements voice calls and multimedia conferences through the Internet Protocol (IP), that is, performs communication through the Internet. Other informal names include IP telephony (IP telephony), Internet telephony (Internet telephony), broadband telephony (broadband telephony), and broadband phone service (broadband phone service).

The VoIP may be used for Internet access devices, such as VoIP phones, smartphones, and personal computers, to make calls and send SMS messages through cellular networks and Wi-Fi.

A basic principle of the VoIP is as follows: Voice data is compressed by using a voice compression algorithm. Then the voice data is packetized according to a TCP/IP standard, and data packets are sent to a receiver through an IP network. Then the voice data packets are combined and decompressed to restore a raw voice signal, to achieve an objective of transmitting voice through the Internet. A core and key device of an IP phone is an IP gateway that maps an area code of each area to a corresponding area gateway IP address. The information is stored in a database. Data connection processing software processes calls, packetize digital voice, manages routes, and performs other functions. When a user makes a toll call, a gateway determines an IP address of a corresponding gateway based on information in an area code database, adds the IP address to an IP data packet, and selects an optimal route to reduce a transmission delay. The IP data packet reaches a destination gateway through the Internet. In some areas in which the Internet is unavailable or no gateway is set up, a route may be set, so that a nearest gateway transfers calls through a toll telephone network to implement communication services.

3A is a collective term for AEC, ANR, and AGC. These are three important modules of a speech noise reduction algorithm. AGC is short for Automatic Gain Control, AEC is short for Acoustic Echo Cancellation, and ANR is short for Acoustic Noise Reduction. Usually, the 3A indicates the speech noise reduction algorithm. It can be understood that TC 3Aindicates a speech noise reduction algorithm for operator calls, and VoIP 3A indicates a speech noise reduction algorithm for VoIP calls.

AT command (Attention command) is also referred to as an AT instruction. An AT instruction set is sent by terminal equipment (Terminal Equipment, TE) or data terminal equipment (Data Terminal Equipment, DTE) to a terminal adapter (Terminal Adapter, TA) or data circuit terminal equipment (Data Circuit Terminal Equipment, DCE). The TE sends AT instructions through the TA to control functions of a mobile station (Mobile Station, MS) and interact with network services.

A radio interface layer (Radio Interface Layer, RIL) reliably transmits data, sends AT commands, and parses responses. The radio interface layer makes various wireless voice and data applications possible. The RIL is a bridge between a modem and an AP on a mobile phone. The RIL plays a quite important role. The RIL is designed as a module that can reliably and efficiently transmit data. Certainly, in addition to support for a network, the RIL also supports SMS, voice calls, and other functions. On this point, performance of the RIL affects all software related to wireless communication applications, and appropriateness of a software design also affects the performance of the RIL.

The RIL is located at an interface layer of a protocol stack of a radio baseband system. The RIL provides an interface for processing communication between system software and wireless hardware. The RIL provides an abstraction layer that allows a separate driver to be created and implemented on different wireless devices. The RIL abstracts hardware-related details of devices, so that OEMs can integrate a plurality of modems into their devices, making it possible to differentiate products. This separate driver allows all wireless devices to operate under one set of components. A smartphone usually uses a dual-CPU architecture: a baseband processor that mainly processes encoding and decoding of digital signals and voice signals and communication protocols such as GSM, NR, LTE, GSM, CDMA, UMTS, and TDS; and an application processor that runs an operating system and various applications.

Device management (Device Management, DM) is also referred to as terminal management. In embodiments provided in this application, a mobile terminal may be remotely managed in a wireless manner. The DM may include terminal firmware updates (FOTA), remote capture of terminal parameters, and terminal parameter configuration.

A hardware abstraction layer (Hardware Abstraction Layer, HAL) lays a foundation for running of an Android framework layer. For all hardware-related operations that needs to be performed at an upper layer of an Android system, HAL-related APIs, such as GPS, BT, input device, graphics, camera, and audio APIs, need to be called. An Android system of each hardware device specifies some functions. An HAL of each device is a set of functions (by invoking corresponding drivers). If a vendor does not want to provide its own driver as an open source, some device functions may be implemented at the HAL layer.

ALSA is short for Advanced Linux Sound Architecture, advanced Linux sound architecture, and supports audio and a musical instrument digital interface (Musical Instrument Digital Interface, MIDI) on a Linux operating system. In a 2.6-series kernel, the ALSA has become a default sound subsystem to replace an open sound system (Open Sound System, OSS) in a 2.4-series kernel.

Main features of the ALSA include: efficiently supporting all types of audio interfaces from consumer entry-level audio adapters to professional audio devices; using a fully modular design; supporting symmetric multi-processing (SMP) and thread security; supporting backward compatibility with the OSS; and providing a user-space alsa-lib library to simplify application development.

Pulse code modulation (Pulse Code Modulation, PCM) is one of coding schemes for digital communication. A main process is to sample analog signals such as speech and images at specific intervals to make the analog signals discrete. In addition, sampled values are rounded off and quantized by layer, and the sampled values represent amplitudes of sampled pulses based on a group of binary codes. During PCM, an input analog signal is sampled, quantized, and encoded, and digits encoded in binary are used to represent an amplitude of the analog signal. A receiver then restores the codes to a raw analog signal. That is, A/D conversion of digital audio includes three processes: sampling, quantization, and encoding.

Subsystems of a distributed mobile sensing development platform (Distributed Mobile Sensing development platform, DMSDP) provide two core capabilities: distributed fusion perception and distributed device virtualization.

Distributed fusion perception: Various device perception sources are aggregated based on a distributed capability of HarmonyOS (HarmonyOS) to accurately sense a space status, a movement status, a gesture, a state of health, and the like of a user, and build ubiquitous basic perception capabilities in all scenarios to support new smart life experience.

Distributed component virtualization: A component virtualization platform is built based on a distributed capability of HarmonyOS, to virtualize various components (for example, a camera, a display, and an SPK/MIC) of external devices into components of a local device for extension use, and share components of the local device to other devices for use.

A voice proxy (VoiceProxy) module is an interaction module between the Hi-Fi/ADSP and the AP, and mainly serves as a voice proxy. To be specific, a user reads and/or sends voice and videos through the VoiceProxy.

A mixer is a module for mixing audio, and may integrate audio from a plurality of sources into a stereo audio track or a mono audio track.

A QoS class identifier (QoS Class Identifier, QCI) is a parameter used by a system to identify transmission characteristics of a service data packet, and is used to measure specific packet forwarding behavior (for example, a packet loss rate and a packet delay budget) provided for an SDF (service data stream). The QoS class identifier is applied to both a GBR bearer and a non-GBR bearer, and is used to specify a control bearer-level packet forwarding mode (for example, a scheduling weight, an admission threshold, a queue management threshold, and a link layer protocol configuration) defined in an access node. These parameters are preconfigured by an operator in the access node.

The 23203 protocol defines QCI values corresponding to different bearer services. A QCI ranges from 1 to 9, corresponding to different resource types, different priorities, different delays, and different packet loss rates. To ensure normal running of an application service, a matching QCI value needs to be configured for the service (a network-side device usually provides a corresponding interface).

A radio bearer is a service provided by an L2 to an upper layer between UE and a UTRAN. An RB is a connection format set between the UE and the UTRAN, and specifies L1 and L2 formats of a Uu interface, to be specific, configurations of a physical channel, a transport channel, and a logical channel. If there is no service, no RB is needed. Therefore, if signaling needs to be transmitted between a CN/URTRN and UE, only an RRC connection is to be used (actually, there is also a radio bearer, namely, an SRB). If there is a service, an RB needs to be configured. Similarly, an Iub bearer needs to be configured. (If there is a DCH, a DCH FP bearer needs to be configured. This is the same as an RL.)

Radio bearers are classified into a signaling radio bearer (Signaling Radio Bearer, SRB) and a data radio bearer (Data Radio Bearer, DRB). The SRB is used to transmit signaling, and the DRB is used to transmit data. Scheduling priorities of all SRBs are higher than those of all DRBs.

A socket is an encapsulation of the TCP/IP protocol. Emergence of the socket is only intended to make it easier for programmers to use a TCP/IP protocol stack. The socket is not a protocol, but is an intermediate software abstraction layer for communication between an application layer and a TCP/IP protocol family, and is a group of call interfaces (API functions of a TCP/IP network).

A codec is short for coder-decoder "Coder-Decoder". Generally, the codec is A/D conversion and D/A conversion for audio. The A/D is an encoding process of converting an analog (Analog) signal that can be heard by human ears into a digital (Digital) signal that can be processed by a computer. The D/A is a decoding process of converting a processed digital signal into an analog signal that can be heard by human ears. The codec is a processing chip with the foregoing two functions.

The 3rd Generation Partnership Project (3rd Generation Partnership Project, 3GPP) is a standardization organization established in December 1998. Currently, 3GPP members include ETSI in Europe, ARIB and TTC in Japan, CCSA in China, TTA in South Korea, and ATIS in North America. An objective of the 3GPP is to formulate and implement a global (third-generation) mobile phone system specifications within the scope of the IMT-2000 plan of the ITU. The 3GPP is dedicated to evolution from GSM to UMTS (W-CDMA). Although air interfaces vary greatly from the GSM to the W-CDMA, core networks use a GPRS framework, and therefore specific continuity is still retained. The 3GPP mainly formulates a third-generation technical specification based on a GSM core network and by using UTRA (FDD is a W-CDMA technology, and TDD is a TD-CDMA technology) as a radio interface.

In daily life, a plurality of calls usually need to be answered. However, in an actual case, when a user is performing a unidirectional call (for example, performing live streaming, watching livestreaming, or performing a video conference or a conference call) or a bidirectional call, if a new call comes in, the user may not be able to answer the new call while holding the original call, or may answer the new call but a prompt tone is played to a peer end of the original call, affecting user experience of the peer end.

For example, when both an original call and a new call that a user needs to answer are operator calls (calls made through an operator) based on one SIM card, an electronic device used by the user to answer the calls may keep normal running of only one call, and initiate a call hold (HOLD) process to a network side to hold the other call. After receiving an instruction sent by the electronic device, the network side delivers a ring back tone to a peer end of the other call. In this case, the user cannot simultaneously answer the two calls, and the peer end is also affected by the ring back tone. When an original call answered by a user and a new call are operator calls based on two SIM cards, the original call is automatically hung up when the user answers the new call, that is, the user cannot simultaneously answer the two calls. When the original call answered by the user is an OTT call and the new call is an operator call, or when the original call answered by the user is an operator call and the new call is an OTT call, because the OTT call and the operator call cannot coexist, the user cannot simultaneously answer the two calls. An OTT conference and an operator call can coexist, that is, a user can answer the two calls. However, when the user is answering the operator call, the OTT conference is muted (audio is paused, but no ring back tone is played). When the operator call ends (including hang-up by a local end and hang-up by a peer end), the OTT conference is automatically resumed (unmuted). When one of an original call answered by a user and a new call is a MeeTime call and the other call is an operator call, although the MeeTime call and the operator call have a same priority, a second incoming call takes precedence, and a second outgoing call is not supported. The user cannot simultaneously answer the two calls.

It should be noted that a normally answered call or a normally ongoing call mentioned in embodiments of this application is a call that can implement normal communication between two parties. To be specific, the two parties can successfully obtain and send call-related data (for example, voice data and video data).

Based on the foregoing content, this application provides a call processing method and a related device, to answer a plurality of incoming calls. For example, an electronic device is used to switch between and answer an original call and a new call. When one call is normally performed, no ring back tone is played for a peer end of the other call, so that user experience is improved. For another example, another electronic device is used to help answer a new call or an original call. To be specific, one call is answered on an original electronic device, and the other call is answered on the another electronic device, so that a user can simultaneously answer the two calls.

The following first describes an apparatus in embodiments of this application.

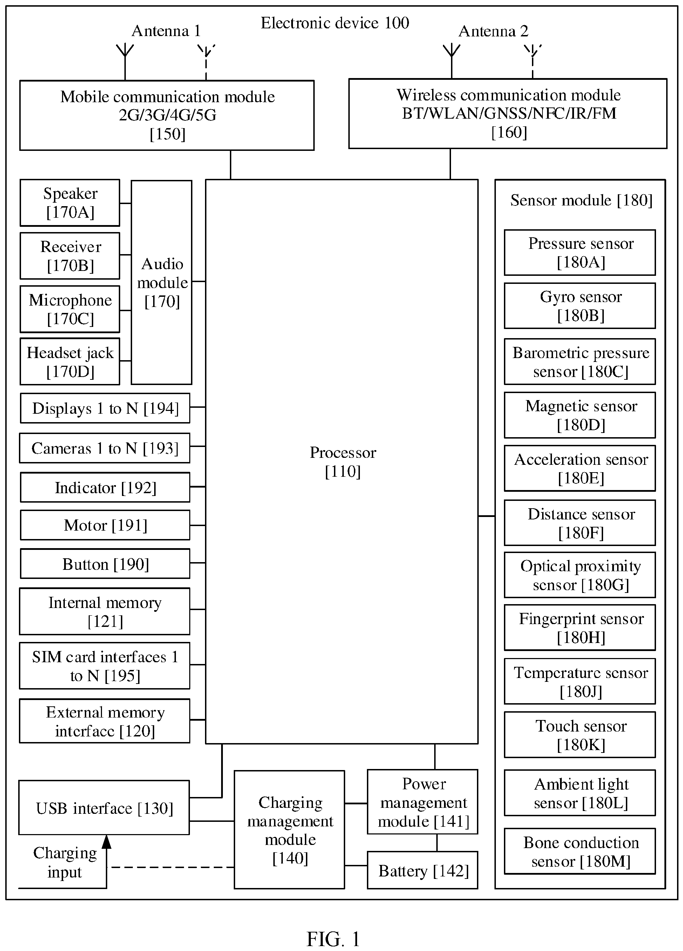

FIG. 1 is a schematic diagram of a hardware structure of an electronic device 100 according to an embodiment of the present invention.

The electronic device 100 may include a processor 110, an external memory interface 120, an internal memory 121, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (Subscriber Identification Module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or there may be different component layouts. The components shown in the figure may be implemented by using hardware, software, or a combination of software and hardware.

The processor 110 may include one or more processing units. For example, the processor 110 may include an application processor (Application Processor, AP), a modem processor, a graphics processing unit (Graphics Processing unit, GPU), an image signal processor (Image Signal Processor, ISP), a controller, a memory, a video codec, a digital signal processor (Digital Signal Processor, DSP), a baseband processor, and/or a neural-network processing unit (Neural-network Processing Unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like.

The I2C interface is a two-way synchronous serial bus, and includes a serial data line (Serial Data Line, SDA) and a serial clock line (Serial Clock Line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and analog signal sampling, quantization, and encoding. In some embodiments, the audio module 170 may be coupled to the wireless communication module 160 through the PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (Camera Serial Interface, CSI), a display serial interface (Display Serial Interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device 100 such as an AR device.

It can be understood that an interface connection relationship between the modules in this embodiment of the present invention is merely an example for description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from a charger. The charger may be a wireless charger or a wired charger. In some embodiments in which wired charging is used, the charging management module 140 may receive charging input from a wired charger through the USB interface 130. In some embodiments in which wireless charging is used, the charging management module 140 may receive wireless charging input through a wireless charging coil of the electronic device 100. The charging management module 140 may further supply power to the electronic device 100 through the power management module 141 while charging the battery 142.

The power management module 141 is connected to the battery 142, the charging management module 140, and the processor 110. The power management module 141 receives input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (Low Noise Amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium- or highfrequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the electronic device 100 for wireless communication such as a wireless local area network (Wireless Local Area Network, WLAN) (for example, a wireless fidelity (Wireless Fidelity, Wi-Fi) network), Bluetooth (Bluetooth, BT), a global navigation satellite system (Global Navigation Satellite System, GNSS), frequency modulation (Frequency Modulation, FM), a near field communication (Near Field Communication, NFC) technology, or an infrared (Infrared, IR) technology. The wireless communication module 160 may be one or more devices integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (Global System for Mobile Communications, GSM), a general packet radio service (General Packet Radio Service, GPRS), code division multiple access (Code Division Multiple Access, CDMA), wideband code division multiple access (Wideband Code Division Multiple Access, WCDMA), time-division code division multiple access (Time-Division Code Division Multiple Access, TD-SCDMA), long term evolution (Long Term Evolution, LTE), BT, a GNSS, a WLAN, NFC, FM, an IR technology, and/or the like. The GNSS may include a global positioning system (Global Positioning System, GPS), a global navigation satellite system (Global Navigation Satellite System, GLONASS), a BeiDou navigation satellite system (BeiDou Navigation Satellite System, BDS), a quasi-zenith satellite system (Quasi-Zenith Satellite System, QZSS), and/or a satellite-based augmentation system (Satellite-Based Augmentation System, SBAS).

In an embodiment of this application, communication between a first electronic device and a second electronic device, communication between the first electronic device and a third electronic device, and communication between the first electronic device and a fourth electronic device may be implemented by the mobile communication module 150 and/or the wireless communication module 160. It can be understood that different electronic devices may communicate with each other in a point-to-point communication mode, or communicate with each other through a server.

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light-Emitting Diode, AMOLED), a flexible light-emitting diode (Flex Light-Emitting Diode, FLED), a mini-LED, a micro-LED, a micro-OLED, a quantum dot light-emitting diode (Quantum Dot Light-Emitting Diode, QLED), or the like. In some embodiments, the electronic device 100 may include one or N displays 194, where N is a positive integer greater than 1.

The electronic device 100 may implement an obtaining function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image or video. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transmits the electrical signal to the ISP for converting the electrical signal into a digital image or video signal. The ISP outputs the digital image or video signal to the DSP for processing. The DSP converts the digital image or video signal into a standard image or video signal in an RGB format, a YUV format, or the like. In some embodiments, the electronic device 100 may include one or N cameras 193, where N is a positive integer greater than 1. For example, in some embodiments, the electronic device 100 may obtain images with a plurality of exposure coefficients through the N cameras 193. Further, in video post-processing, the electronic device 100 may obtain an HDR image through synthesis based on the images with the plurality of exposure coefficients by using an HDR technology.

The digital signal processor is configured to process a digital signal, and may process another digital signal in addition to the digital image or video signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of encoding formats, for example, moving picture experts group (Moving Picture Experts Group, MPEG)-1, MPEG-2, MPEG-3, and MPEG-4.

The NPU is a neural-network (Neural-Network, NN) computing processor, quickly processes input information by referring to a structure of a biological neural network, for example, by referring to a mode of transmission between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be connected to an external storage card, for example, a microSD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application program for at least one function (for example, a sound play function or an image or video play function), and the like. The data storage area may store data (for example, audio data and an address book) and the like that are created during use of the electronic device 100. In addition, the internal memory 121 may include a high-velocity random access memory, or may include a nonvolatile memory, for example, at least one magnetic disk storage device, a flash memory, or a universal flash storage (Universal Flash Storage, UFS).

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may listen to music or answer a hands-free call through the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to obtain a sound signal and further implement a noise reduction function. In some other embodiments, three, four, or more microphones 170C may alternatively be disposed in the electronic device 100, to obtain a sound signal, implement noise reduction, and recognize a sound source, to implement a directional recording function and the like.

The headset jack 170D is used for connecting a wired headset. The headset jack 170D may be the USB interface 130, or may be a 3. 5 mm open mobile terminal platform (Open Mobile Terminal Platform, OMTP) standard interface or a cellular telecommunications industry association of the USA (Cellular Telecommunications Industry Association of the USA, CTIA) standard interface.

The sensor module 180 may include one or more sensors, and these sensors may belong to a same type or different types. It can be understood that the sensor module 180 shown in FIG. 1 is merely example division, and there may be other division. This is not limited in this application.

The pressure sensor 180Ais configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation based on the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyro sensor 180B may be configured to determine a motion attitude of the electronic device 100. In some embodiments, an angular velocity of the electronic device 100 around three axes (that is, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, may detect a magnitude and a direction of gravity when the electronic device 100 is still, and may be further configured to recognize an attitude of the electronic device 100 and used in applications such as landscape/portrait mode switching and a pedometer.

The distance sensor 180F is configured to measure a distance. The electronic device 100 may measure a distance by using infrared or laser. In some embodiments, in a photographing scenario, the electronic device 100 may measure a distance by using the distance sensor 180F, to implement quick focusing.

An optical proximity sensor 180G may include, for example, a light-emitting diode (LED), and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a smart cover mode or a pocket mode for automatic screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to obtain a fingerprint. The electronic device 100 may use a feature of the obtained fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to low temperature. In some other embodiments, when the temperature is less than still another threshold, the electronic device 100 boosts an output voltage of the battery 142 to avoid abnormal shutdown due to low temperature.

The touch sensor 180K is also referred to as a "touch panel". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. Visual output related to the touch operation may be provided by using the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal, obtained by the bone conduction sensor 180M, of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive input on the button, and generate button signal input related to user settings and function control of the electronic device 100.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effect. The motor 191 may also correspond to different vibration feedback effect for touch operations performed on different regions of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may belong to a same type or different types. The SIM card interface 195 is also compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

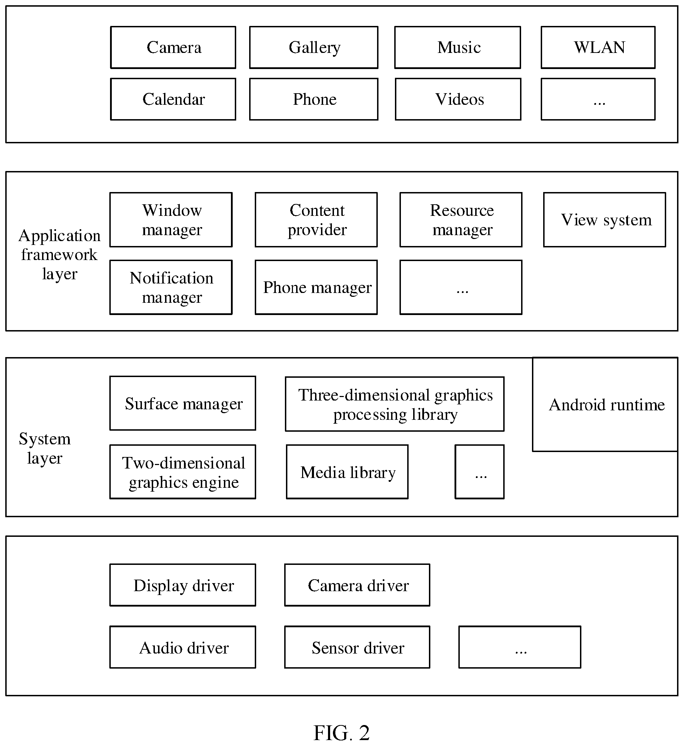

FIG. 2 is a schematic diagram of a software structure of an electronic device 100 according to an embodiment of this application.

In a hierarchical architecture, software is divided into several layers, and each layer has a clear role and task. The layers communicate with each other through a software interface. In some embodiments, a system is divided into four layers: an application layer, an application framework layer, a runtime (Runtime) and system library, and a kernel layer from top to bottom.

The application layer may include a series of application packages.

As shown in FIG. 2, the application packages (which may also be referred to as applications) may include applications such as Camera, Gallery, Calendar, Phone, Map, Navigation, WLAN, Bluetooth, Music, Videos, and Messaging.

The application framework layer provides an application programming interface (Application Programming Interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog interface. For example, text information is displayed in the status bar, a prompt tone is played, the electronic device vibrates, or an indicator blinks.

The runtime (runtime) includes a kernel library and a virtual machine. The runtime schedules and manages the system.

The kernel library includes two parts: a function that needs to be invoked by a programming language (for example, Java language), and a kernel library of the system.

The application layer and the application framework layer run on the virtual machine. The virtual machine executes programming files (for example, Java files) at the application layer and the application framework layer as binary files. The virtual machine is configured to perform functions such as object lifecycle management, stack management, thread management, security and exception management, and garbage collection.

The system library may include a plurality of functional modules, for example, a surface manager (Surface Manager), a media library (Media Libraries), a three-dimensional graphics processing library (for example, OpenGL ES), and a two-dimensional graphics engine (for example, SGL).

The surface manager is configured to manage a display subsystem, and provide fusion of two-dimensional (2-Dimensional, 2D) and three-dimensional (3-Dimensional, 3D) layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement 3D graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example operating process of software and hardware of the electronic device 100 with reference to a photographing scenario.

When the touch sensor 180K receives a touch operation, a corresponding hardware interrupt is sent to the kernel layer. The kernel layer processes the touch operation into a raw input event (including information such as touch coordinates and a timestamp of the touch operation). The raw input event is stored at the kernel layer. The application framework layer obtains the raw input event from the kernel layer, and identifies a control corresponding to the input event. For example, the touch operation is a tap operation, and a control corresponding to the tap operation is a control of an icon of a camera application. The camera application invokes an interface of the application framework layer to start the camera application, and further invokes the kernel layer to start the camera driver, to capture a static image or a video by using the camera 193.

The following describes a system architecture in embodiments of this application.

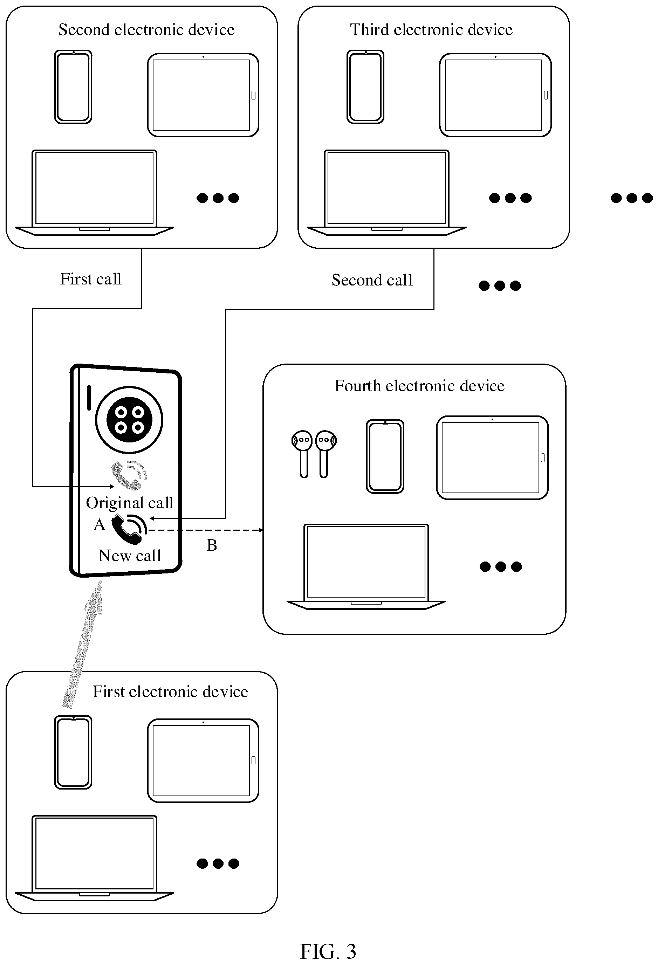

FIG. 3 is a schematic diagram of a call processing system according to an embodiment of this application. The call processing system includes a first electronic device (for example, a mobile phone in FIG. 3), a second electronic device, a third electronic device, and a fourth electronic device. A first call is established between the first electronic device and the second electronic device, and a second call is established between the first electronic device and the third electronic device.

It can be understood that, regardless of whether the first electronic device serves as a called party of the first call or the second electronic device serves as a called party of the first call, provided that the called party of the first call agrees to perform a call, the first electronic device and the second electronic device may establish a communication link. For example, the called party of the first call triggers an instruction for allowing establishment of a call, a first communication link is established between the first electronic device and the second electronic device, and the first communication link is used to implement the first call between the first electronic device and the second electronic device. To be specific, the first electronic device may transmit, through the first communication link, call data between the first electronic device and the second electronic device.

Similarly, when a second call (a new call) comes in, regardless of whether the first electronic device serves as a calling party of the second call or a called party of the second call, provided that the called party of the second call agrees to perform a call, the first electronic device and the third electronic device may establish a communication link. For example, the called party of the second call triggers an instruction for allowing establishment of the second call, a second communication link is established between the first electronic device and the third electronic device, and the second communication link is used to implement the second call between the first electronic device and the third electronic device. To be specific, the first electronic device may transmit, through the second communication link, call data between the first electronic device and the third electronic device.

It should be noted that the first electronic device may be a calling party of the first call or a called party of the first call, and the first electronic device may be a calling party of the second call or a called party of the second call.

FIG. 3 shows two answering modes in which the first electronic device simultaneously answers two calls.

Mode A: The first electronic device normally transmits call data of the second call through the communication link, but does not receive or receives and discards call data sent by the second electronic device, and sends call data to the second electronic device (in this case, the call data may include unwanted data irrelevant to the call, for example, a silence frame or RTCP data). Alternatively, the first electronic device may not send call data to the second electronic device. In this case, the first electronic device may change a sending/receiving attribute of the first electronic device by changing a setting item, or may send, to a network side, an instruction for modifying a sending/receiving attribute of the first electronic device. In the two manners, no call hold (CALL HOLD) process needs to be initiated. This avoids impact of crosstalk on a user while preventing the second electronic device from playing a ring back tone.

It can be understood that, the normal transmission means that call data is transmitted between electronic devices that establish a communication link and is finally displayed to a user. For example, voice data and/or video data are transmitted, so that both users can hear voice of each other and/or see a picture transmitted by each other. Certainly, some additional settings, for example, operations of adjusting a volume and turning off a camera, performed by a user on a call are not considered in the normal transmission.

It should be noted that the normal transmission through the communication link in this embodiment of this application may be understood as that a call is normally performed or a call is normally answered. For related descriptions of the being normally performed or being normally answered, refer to the foregoing descriptions. Details are not described herein again.

It can be understood that the sending/receiving attribute means an attribute of receiving data and sending data by the electronic device. The sending/receiving attribute includes but is not limited to: no receiving or sending, receiving only and no sending, sending only and no receiving, and both receiving and sending. The no receiving or sending means that the electronic device neither receives data nor sends data (for example, "inactive" may be used to indicate no receiving or sending). The receiving only and no sending means that the electronic device only receives data but does not send data (for example, "recvonly" may be used to indicate receiving only and no sending). The sending only and no receiving means that the electronic device only sends data but does not receive data (for example, "sendonly" may be used to indicate sending only and no receiving). The both receiving and sending means that the electronic device both receives data and sends data (for example, "sendrecv" or "active" may be used to indicate both receiving and sending).

It should be noted that, in an embodiment of this application, the data mentioned in the description of the meaning of the sending/receiving attribute is wanted data (for example, voice data or video data of both parties) of call data, and does not include unwanted data (for example, a silence frame or RTCP data) of the call data.

In addition, for the call hold process, refer to 3GPP related protocols and specifications. Details are not described herein again.

Mode B: The first electronic device transfers at least one of the two calls to another electronic device for answering. For example, the first electronic device performs a call with the second electronic device through the first communication link, and transfers the second call to a fourth electronic device that establishes a communication connection to the first electronic device. To be specific, after receiving call data sent by the third electronic device, the first electronic device further sends, to the fourth electronic device, the call data sent by the third electronic device; and may also receive call data sent by the fourth electronic device, and send the call data to the third electronic device. Similarly, alternatively, the first electronic device may perform a call with the third electronic device through the second communication link, and transfer the first call to a fourth electronic device that establishes a communication connection to the first electronic device. To be specific, after receiving call data sent by the second electronic device, the first electronic device further sends, to the fourth electronic device, the call data sent by the second electronic device; and may also receive call data sent by the fourth electronic device, and send the call data to the second electronic device.

In the foregoing method, a ring back tone caused by a call hold process initiated by a device side to the network side can be avoided, and crosstalk that may be caused by simultaneously answering a plurality of calls can also be avoided, so that both calls can be performed smoothly, and user experience is improved.

It can be understood that, when the first electronic device answers a call or transfers a call to another electronic device for answering, a MIC (microphone) and a speaker (speaker) of the first electronic device and/or the another electronic device may be directly used to answer the call, or a headset matching the first electronic device and/or the another electronic device may be used to answer the call.

It should be noted that the first electronic device may transfer a plurality of calls to other devices for answering. For example, when simultaneously answering two calls, the first electronic device may transfer one of the calls to the fourth electronic device for answering, and transfer the other call to a fifth electronic device for answering.

It can be understood that the first electronic device may be an electronic device with a function of receiving a user instruction. For example, the first electronic device may be one of a mobile phone, a tablet computer, a PC (Personal Computer, personal computer), a watch, an automobile head unit, and other electronic devices. The second electronic device may be an electronic device with a function of receiving a user instruction. For example, the second electronic device may be one or more of a mobile phone, a tablet computer, a PC, a watch, an automobile head unit, and other electronic devices. The third electronic device may be an electronic device with a function of receiving a user instruction. For example, the third electronic device may be one or more of a mobile phone, a tablet computer, a PC, a watch, an automobile head unit, and other electronic devices. The fourth electronic device may be an electronic device with a function of receiving a user instruction. For example, the fourth electronic device may be one of a headset, a mobile phone, a tablet computer, a PC, a watch, an automobile head unit, and other electronic devices. The fifth electronic device may be an electronic device with a function of receiving a user instruction. For example, the fifth electronic device may be one of a headset, a mobile phone, a tablet computer, a PC, a watch, an automobile head unit, and other electronic devices. In addition, the first electronic device, the second electronic device, the third electronic device, the fourth electronic device, and the fifth electronic device may all be the foregoing electronic device 100.

It should be noted that the first call may be an operator call (a call performed through an operator) or a third-party call (a call performed through a third-party application), and the second call may be an operator call or a third-party call. It can be understood that the third-party call includes an OTT call. For example, the third-party call may be a WeChat call (a voice/video call), a QQ call (a voice/video call), a MeeTime call, or an online conference (for example, Tencent Meeting).

In an embodiment of this application, more than two calls may be further performed. For example, the plurality of calls may be answered on one electronic device. In this case, normal running of one call is kept, and corresponding processing is performed on other calls (refer to the foregoing content). Alternatively, the plurality of calls may be answered on a plurality of electronic devices. In this case, one or more of the plurality of calls may be selected to be transferred to one or more other electronic devices (refer to the foregoing content).

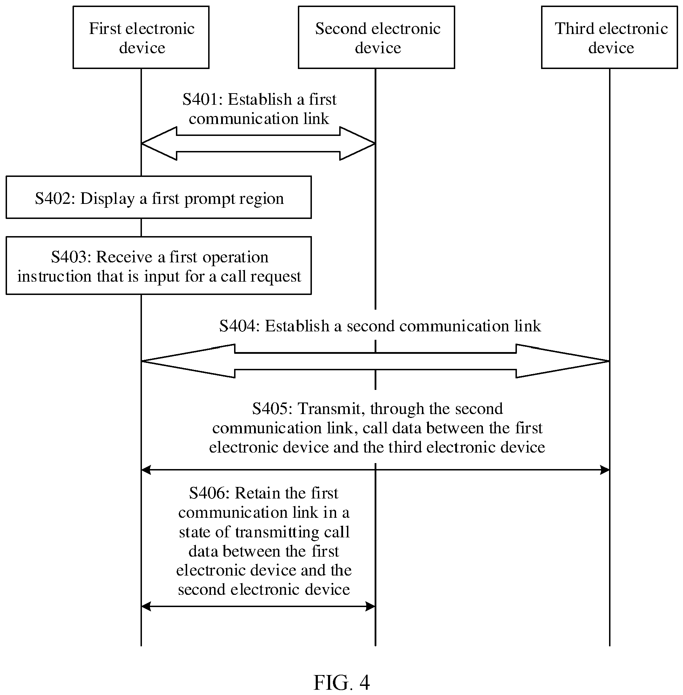

Based on the call processing system shown in FIG. 3, an embodiment of this application provides a call processing method. FIG. 4 is a flowchart of a call processing method according to an embodiment of this application. The method includes but is not limited to the following steps.

S401: A first electronic device establishes a first communication link to a second electronic device.

Specifically, the first electronic device establishes the first communication link to the second electronic device. To be specific, a first call is established between the first electronic device and the second electronic device, and call data between the first electronic device and the second electronic device is transmitted through the first communication link.

It can be understood that the first electronic device may be a calling party of the first call, or a called party of the first call; and the call data may include call data sent by the first electronic device to the second electronic device, and call data sent by the second electronic device to the first electronic device.

It should be noted that, after the first communication link is established, the first electronic device and the second electronic device are in a normal call state, to be specific, a call between the first electronic device and the second electronic device is normally performed.

S402: The first electronic device displays a first prompt region.

Specifically, the first electronic device displays the first prompt region, where the first prompt region is used to indicate a call request between the first electronic device and a third electronic device. Specifically, when the first electronic device serves as a called party and the third electronic device serves as a calling party, the first prompt region may indicate a call request of the third electronic device for the first electronic device.

In an embodiment of this application, the first prompt region is an interface that indicates a call request sent by the third electronic device to the first electronic device. In response to an operation performed by a user on the first prompt region, for example, in response to an operation (for example, a touch operation, a tap operation, a gesture operation, or voice control) performed by the user on an icon or a control in the first prompt region, the first electronic device accepts the call request sent by the third electronic device, or rejects the call request sent by the third electronic device.

In an embodiment of this application, the first prompt region may be displayed as a pop-up window. To be specific, the first prompt region may be displayed as a pop-up window for indicating the call request sent by the third electronic device to the first electronic device. It can be understood that the first prompt region may alternatively be in another form. This is not limited in this application.

It can be understood that the icon or the control in the first prompt region may have a plurality of representation forms, not limited to representation forms in the following examples. This is not limited in this application. In addition, the operation may be one or more of a touch operation, a tap operation, a gesture operation, a voice operation, and the like. This is not limited in this application.

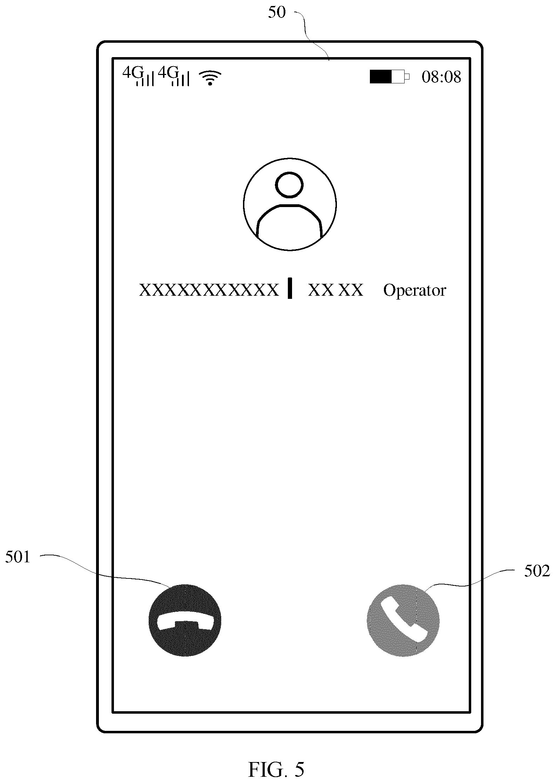

For example, FIG. 5 is a schematic diagram of a first prompt region according to an embodiment of this application. An interface 50 is the first prompt region. To be specific, the interface 50 is an interface indicating the call request sent by the third electronic device to the first electronic device. The interface 50 may include a control 501 and a control 502. The control 501 is a control for rejecting a call, and in response to an operation (for example, a touch operation, a tap operation, a gesture operation, or voice control) performed by a user on the control 501, the first electronic device rejects the call request sent by the third electronic device. The control 502 is a control for agreeing to a call, and in response to an operation (for example, a touch operation, a tap operation, a gesture operation, or voice control) performed by a user on the control 501, the first electronic device agrees to the call request sent by the third electronic device.

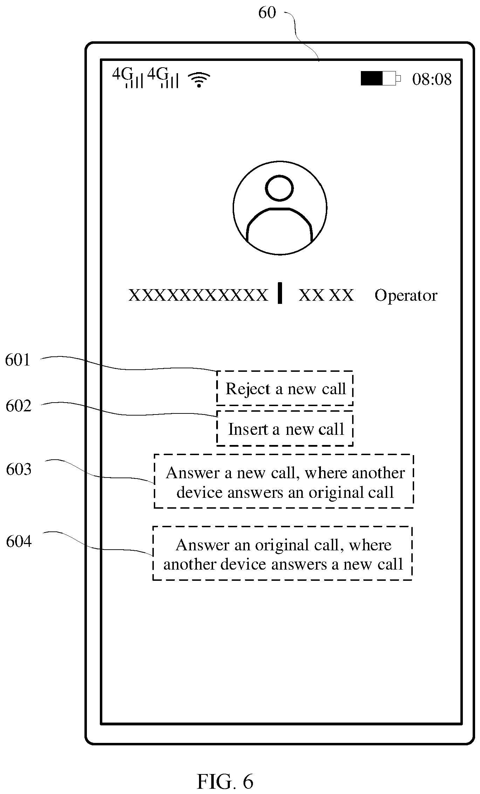

For example, FIG. 6 is a schematic diagram of another first prompt region according to an embodiment of this application. An interface 60 is the first prompt region. To be specific, the interface 60 is an interface indicating the call request sent by the third electronic device to the first electronic device. The interface 60 may include a control 601, a control 602, a control 603, and a control 604. In response to an operation (for example, a touch operation, a tap operation, a gesture operation, or voice control) performed by a user on the control 601, the first electronic device rejects a new call (the call request of the third electronic device). In response to an operation (for example, a touch operation, a tap operation, a gesture operation, or voice control) performed by a user on the control 602, the first electronic device inserts a new call (the call request of the third electronic device). In response to an operation (for example, a touch operation, a tap operation, a gesture operation, or voice control) performed by a user on the control 603, the first electronic device answers a new call (the call request of the third electronic device), and another device answers an original call. In response to an operation (for example, a touch operation, a tap operation, a gesture operation, or voice control) performed by a user on the control 604, the first electronic device answers an original call, and another device answers a new call (the call request of the third electronic device).

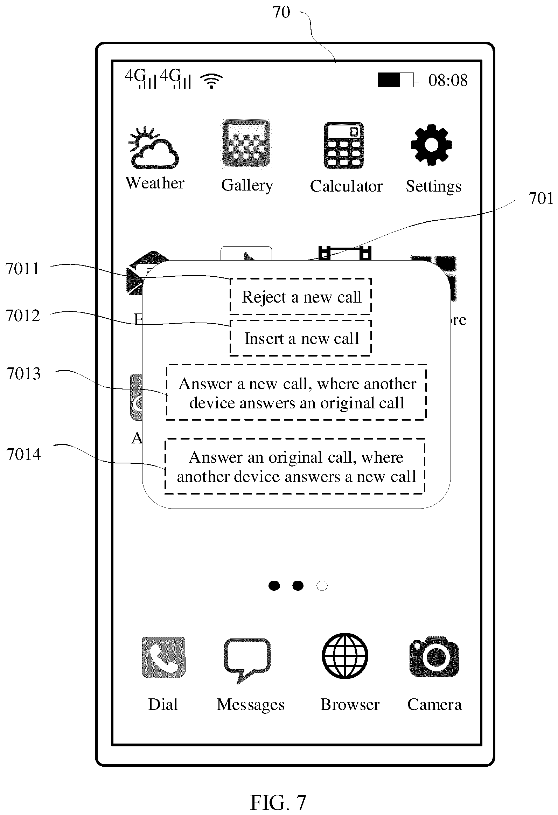

For example, FIG. 7 is a schematic diagram of another first prompt region according to an embodiment of this application. An interface 70 may be any interface (for example, a mobile phone desktop shown in FIG. 7) displayed on the first electronic device. A pop-up window 701 is displayed on the interface 70. The pop-up window 701 is the first prompt region. To be specific, the pop-up window 701 is a pop-up window indicating the call request sent by the third electronic device to the first electronic device. The pop-up window 701 may include a control 7011, a control 7012, a control 7013, and a control 7014. It can be understood that, for descriptions of the control 7011, the control 7012, the control 7013, and the control 7014, reference may be made to the foregoing descriptions of the control 601, the control 602, the control 603, and the control 604. Details are not described herein again.

S403: The first electronic device receives a first operation instruction that is input for the call request.

Specifically, the first electronic device receives the first operation instruction that is input for the call request. It can be understood that the first operation instruction may be an instruction triggered by an operation performed by the user on the first prompt region. It should be further noted that the first operation instruction is input for the call request between the first electronic device and the third electronic device.

It can be understood that a form of the operation performed by the user on the first prompt region includes but is not limited to button control, touchscreen control, voice control, an edge touch, a gesture, and the like.

S404: The first electronic device establishes a second communication link to a third electronic device.

Specifically, according to the first operation instruction, the first electronic device establishes the second communication link to the third electronic device, that is, the first electronic device establishes a second call to the third electronic device. To be specific, the first operation instruction triggered by the user may be understood as an operation instruction triggered by the user to allow a call between the first electronic device and the third electronic device.

S405: The first electronic device transmits, through the second communication link, call data between the first electronic device and the third electronic device.

Specifically, after the first electronic device establishes the second communication link to the third electronic device, the first electronic device and the third electronic device may transmit, through the second communication link, the call data between the first electronic device and the third electronic device.

In an embodiment of this application, after the second communication link is established, the second call between the first electronic device and the third electronic device is normally performed. To be specific, when impact of other factors such as a line problem and user-defined settings (for example, operations of adjusting a volume and turning off a camera) is not considered, the first electronic device normally transmits, through the second communication link, the call data between the first electronic device and the third electronic device. The first electronic device and the third electronic device also normally receive call data, send data, and perform corresponding processing on the call data (for example, perform encoding/decoding and noise reduction on the call data), so that both users can normally perform a call.

It can be understood that, for related descriptions of a normal call, reference may be made to the foregoing descriptions. Details are not described herein again.

In an embodiment of this application, the call data that is between the first electronic device and the third electronic device and that is transmitted by the first electronic device through the second communication link does not include call data sent by the first electronic device to the third electronic device, or includes call data sent by the first electronic device to the third electronic device, but the call data may be unwanted data (for example, a silence frame or RTCP data).

S406: The first electronic device retains the first communication link in a state of transmitting call data between the first electronic device and the second electronic device.

Specifically, after the first electronic device establishes the second communication link to the third electronic device, the first electronic device further retains the first communication link in the state of transmitting call data between the first electronic device and the second electronic device.

In an embodiment of this application, a meaning of retaining the first communication link in the state of transmitting call data between the first electronic device and the second electronic device is similar to the meaning of normally transmitting the call data between the first electronic device and the third electronic device through the second communication link in step S405. The first call established between the first electronic device and the second electronic device is normally performed. To be specific, when impact of other factors such as a line problem and user-defined settings (for example, operations of adjusting a volume and turning off a camera) is not considered, the first electronic device normally transmits, through the first communication link, the call data between the first electronic device and the second electronic device. The first electronic device and the second electronic device also normally receive call data, send data, and perform corresponding processing on the call data (for example, perform encoding/decoding and noise reduction on the call data), so that both users can normally perform a call. This means that both users can normally hear voice of each other. In the case of a video call, both users can further see an image obtained by a camera of each other.

In an embodiment of this application, the retaining the first communication link in the state of transmitting call data between the first electronic device and the second electronic device indicates that the first communication link still has a function of transmitting call data. However, in this case, call data is not necessarily being transmitted on the first communication link, and the first call may be understood as being in a held state, to avoid crosstalk caused by simultaneously performing a plurality of calls on a same device.

It should be further noted that the first electronic device may alternatively simultaneously answer more than two calls. For specific implementation steps, refer to step S402 to step S406. Details are not described herein again.

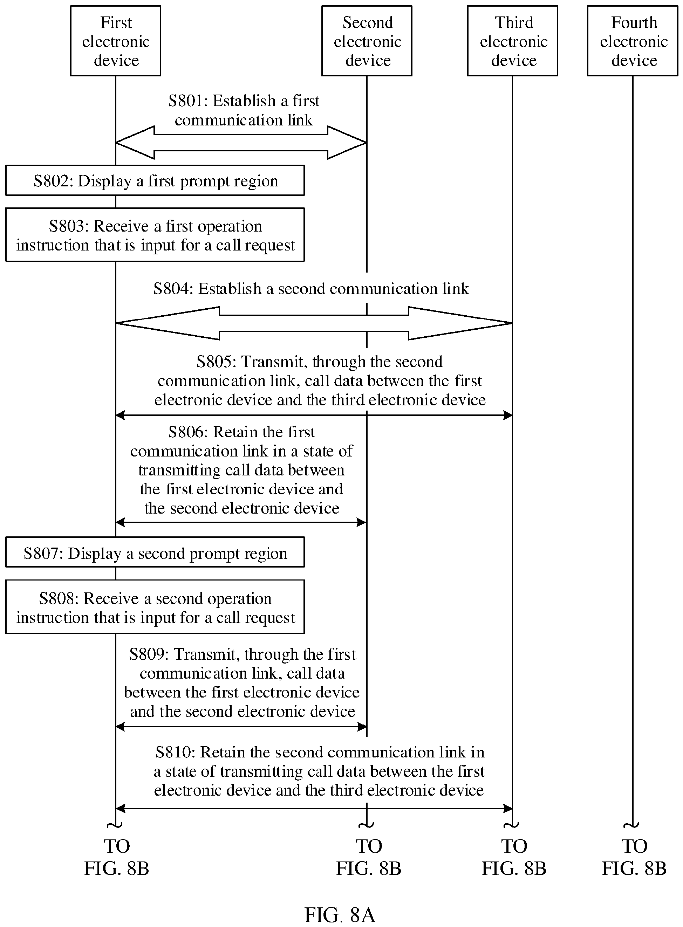

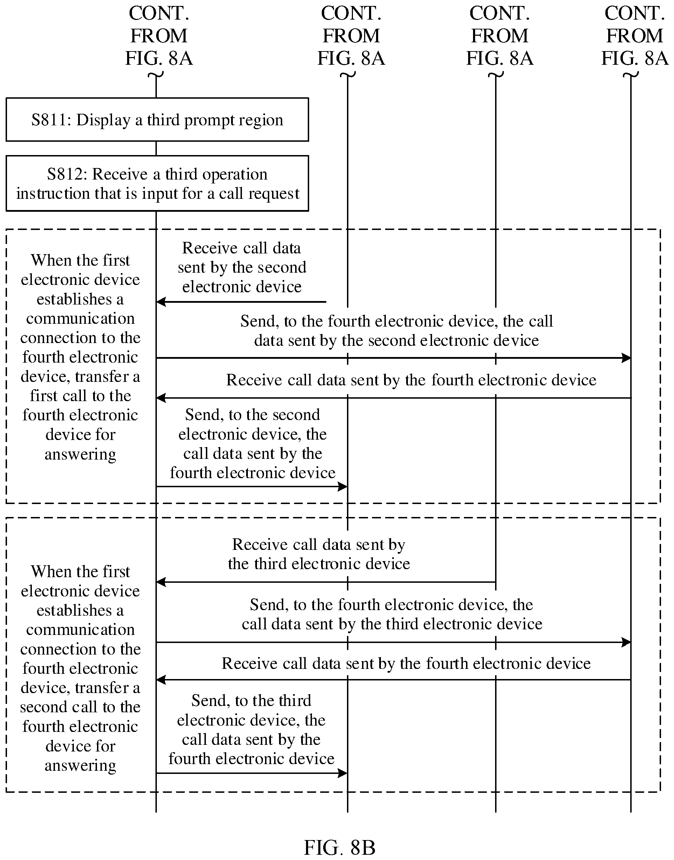

An embodiment of this application further provides a call processing method. FIG. 8A and FIG. 8B are a flowchart of another call processing method according to an embodiment of this application. The method may include the following steps.

S801: A first electronic device establishes a first communication link to a second electronic device.

S802: The first electronic device displays a first prompt region.

S803: The first electronic device receives a first operation instruction that is input for a call request.

S804: The first electronic device establishes a second communication link to a third electronic device.

S805: The first electronic device transmits, through the second communication link, call data between the first electronic device and the third electronic device.

S806: The first electronic device retains the first communication link in a state of transmitting call data between the first electronic device and the second electronic device.

It can be understood that, for specific content of step S801 to step S806, reference may be made to step S401 to step S406. Details are not described herein again.

It should be noted that, in an embodiment of this application, as shown in FIG. 3, the first electronic device may simultaneously answer a first call and a second call in the mode A. In this case, the first electronic device transmits, through the second communication link, call data between the first electronic device and the third electronic device, and retains the first communication link in the state of transmitting call data between the first electronic device and the second electronic device. Specifically, the second call established between the first electronic device and the third electronic device is normally performed (refer to step S405), and the first call established between the first electronic device and the second electronic device is in a held state, to be specific, the first communication link still has a function of transmitting call data, but in this case, call data is not necessarily being transmitted on the first communication link (refer to step S406).

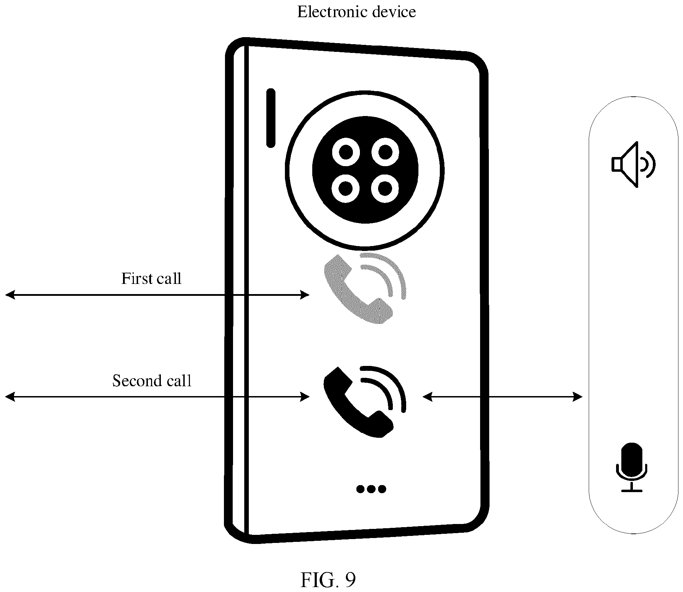

For example, FIG. 9 is a schematic diagram of answering a plurality of calls by a single device according to an embodiment of this application. An electronic device in FIG. 9 simultaneously answers at least two calls: a first call and a second call. The second call is in a normal call state. In this case, the electronic device normally plays call data transmitted by a peer end, and can also normally capture call data of a local end and transmit the call data to the peer end. In short, both parties of the second call can normally hear voice of each other (in the case of a video call, both users can further see an image captured by a camera of each other). The first call is in a held state. In this case, data of the first call may still be transmitted through a communication link used to transmit the data of the first call. The data of the first call may include call data sent by the second electronic device to the first electronic device, and may also include unwanted data (for example, a silence frame or RTCP data) sent by the first electronic device to the second electronic device. It can be understood that the communication link may alternatively not actually transmit call data, but only retain a function of transmitting call data.

It should be noted that, after simultaneously answering the first call and the second call in the mode A, the first electronic device may transfer the first call and the second call to a fourth electronic device and a fifth device for answering. Specifically, when the first electronic device establishes a communication connection to the fourth electronic device, call data sent by the second electronic device is received through the first communication link, the call data sent by the second electronic device is sent to the fourth electronic device, call data sent by the fourth electronic device is received, and the call data sent by the fourth electronic device is sent to the second electronic device through the first communication link; and when a communication connection to the fifth electronic device is established, call data sent by the third electronic device is received through the second communication link, the call data sent by the third electronic device is sent to the fifth electronic device, call data sent by the fifth electronic device is received, and the call data sent by the fifth electronic device is sent to the third electronic device through the second communication link. Alternatively, when a communication connection to the fourth electronic device is established, call data sent by the third electronic device is received through the second communication link, the call data sent by the third electronic device is sent to the fourth electronic device, call data sent by the fourth electronic device is received, and the call data sent by the fourth electronic device is sent to the third electronic device through the second communication link; and when a communication connection to the fifth electronic device is established, call data sent by the second electronic device is received through the first communication link, the call data sent by the second electronic device is sent to the fifth electronic device, call data sent by the fifth electronic device is received, and the call data sent by the fifth electronic device is sent to the second electronic device through the first communication link.

That is, there are two cases of transferring the two calls that are originally on the first electronic device to other devices for answering: In a first case, the first call is transferred to the fourth electronic device for answering, and the second call is transferred to the fifth electronic device for answering. In a second case, the second call is transferred to the fourth electronic device for answering, and the first call is transferred to the fifth electronic device for answering. This is not described first, and is described in detail below when a case in which the first electronic device simultaneously answers the first call and the second call in the mode B is described.

S807: The first electronic device displays a second prompt region.

Specifically, after the first electronic device establishes the second communication connection to the third electronic device (step S804), the first electronic device displays the second prompt region, where the second prompt region is used to indicate a call switching request.

It can be understood that the second prompt region may be an entire interface, or may be a partial region including one or more controls. In an embodiment of this application, the one or more controls include one or more controls for switching a call, and a form of the one or more controls for switching a call is not limited to the following examples.

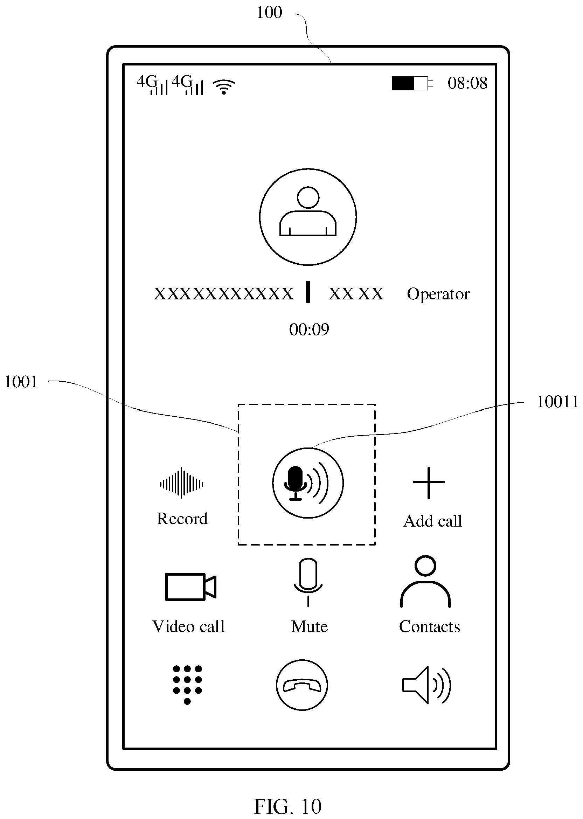

For example, FIG. 10 is a schematic diagram of a second prompt region according to an embodiment of this application. The second prompt region may be an interface 100. The interface 100 may include a PEEK control 10011, and the PEEK control 10011 is used to switch a call. Alternatively, the second prompt region may be a display region 1001 including the PEEK control 10011. It can be understood that the interface shown in FIG. 10 may be an interface displayed after a user triggers the control 502 shown in FIG. 5.

S808: The first electronic device receives a second operation instruction that is input for the call switching request.

Specifically, the first electronic device receives the second operation instruction that is input for the call switching request. It can be understood that the second operation instruction may be an instruction triggered by an operation performed by the user on the second prompt region, and the second operation instruction is used to switch a plurality of calls answered by the first electronic device, to be specific, switch a call that is originally in a held state (refer to step S406) to a normally answered state.

It can be understood that a form of the operation performed by the user on the second prompt region includes but is not limited to button control, touchscreen control, an edge touch, a gesture, and the like. For example, the user touches-and-holds or taps the PEEK control 10011 shown in FIG. 10 to trigger the second operation instruction.

S809: The first electronic device transmits, through the first communication link, the call data between the first electronic device and the second electronic device.

Specifically, according to the second operation instruction that is input for the call switching request and that is received by the first electronic device, the first electronic device transmits, through the first communication link, the call data between the first electronic device and the second electronic device. To be specific, according to the second operation instruction, the first electronic device switches the first call from a held state (refer to step S406) to a normally answered state.

S810: The first electronic device retains the second communication link in a state of transmitting call data between the first electronic device and the third electronic device.

Specifically, according to the second operation instruction that is input for the call switching request and that is received by the first electronic device, the first electronic device retains the second communication link in a state of transmitting call data between the first electronic device and the third electronic device. To be specific, the first electronic device switches the second call from a normally answered state to a held state (refer to step S406), that is, in this case, call data is not necessarily being transmitted on the second communication link.

S811: The first electronic device displays a third prompt region.

Specifically, after the first electronic device establishes the second communication connection to the third electronic device (step S804), the first electronic device displays the third prompt region, where the third prompt region is used to indicate a request for switching a call answering mode.

In an embodiment of this application, the answering mode may include: answering a plurality of calls by one device (for example, in the mode A shown in FIG. 3) and answering a plurality of calls by a plurality of devices (for example, in the mode B shown in FIG. 3); or may include more specific content. For example, the first electronic device answers the first call, and another electronic device answers the second call; or the first electronic device answers the second call, and another electronic device answers the first call. It can be understood that the request for switching a call answering mode may be a request for switching between single-device answering (answering by one device) and multi-device answering, or may be a request for switching between specific implementations of single-device answering and multi-device answering. In addition, when the answering mode does not include a specific implementation of multi-device answering, a specific implementation of switching to multi-device answering may be preset. To be specific, a device to answer the first call and a device to answer the second call are preset. In an embodiment of this application, preset specific content may be adjusted in a setting item, so that a user can adjust a specific implementation of multi-device answering according to an actual requirement.

It can be understood that the third prompt region may be an entire interface, or may be a partial region including one or more controls. In an embodiment of this application, the one or more controls include one or more controls for switching a call answering mode, and a form of the one or more controls for switching a call answering mode is not limited to the following examples.

In addition, the third prompt region and the second prompt region may be a same interface. The interface includes one or more controls for switching a call, and also includes one or more controls for switching a call answering mode. The third prompt region and the second prompt region may be on a same interface. In this case, the third prompt region and the second prompt region are two display regions on the interface.

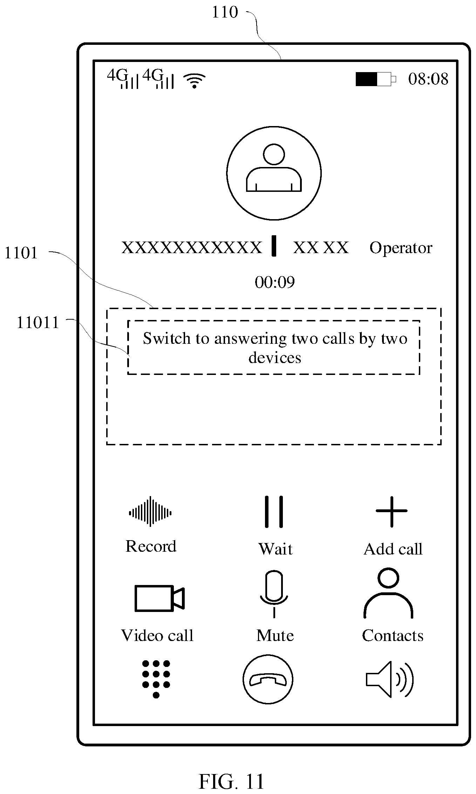

For example, FIG. 11 is a schematic diagram of a third prompt region according to an embodiment of this application. The third prompt region may be an interface 110. The interface 110 may include a control 11011, and the control 11011 is used to switch a call answering mode. Alternatively, the third prompt region may be a display region 1101 including the control 11011. It can be understood that the interface shown in FIG. 11 may be an interface displayed after a user triggers the control 502 shown in FIG. 5. The display region 1101 shown in FIG. 11 and the display region 1001 shown in FIG. 10 may be on a same interface. For example, the interface displayed after the user triggers the control 502 shown in FIG. 5 may include the display region 1001 and the display region 1101.

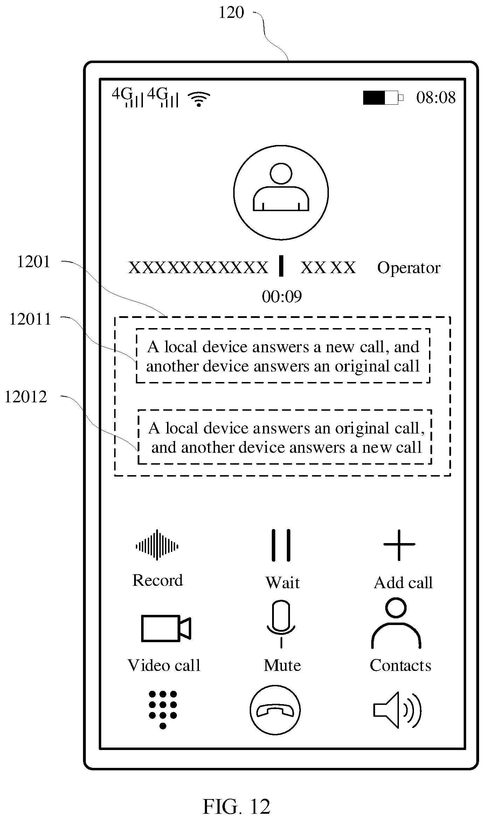

For example, FIG. 12 is a schematic diagram of another third prompt region according to an embodiment of this application. The third prompt region may be an interface 120. The interface 120 may include a control 12011 and a control 12012. The control 12011 and the control 12012 are configured to switch a call answering mode. Specifically, the control 12011 is configured to switch an answering mode to that a local device answers a new call, and another device answers an original call. The control 12012 is configured to switch an answering mode to that a local device answers an original call, and another device answers a new call. Alternatively, the third prompt region may be a display region 1201 including the control 12011. It can be understood that the interface shown in FIG. 12 may be an interface displayed after a user triggers the control 502 shown in FIG. 5. The display region 1201 shown in FIG. 12 and the display region 1001 shown in FIG. 10 may be on a same interface. For example, the interface displayed after the user triggers the control 502 shown in FIG. 5 may include the display region 1001 and the display region 1201.

S812: The first electronic device receives a third operation instruction that is input for the request for switching a call answering mode.

Specifically, the first electronic device receives the third operation instruction that is input for the request for switching a call answering mode. It can be understood that the third operation instruction may be an instruction triggered by an operation performed by a user on the third prompt region, and the third operation instruction is used to switch an answering mode for a plurality of calls answered by the first electronic device, for example, switch from the answering mode A shown in FIG. 3 to the answering mode B. To be specific, the third operation instruction may switch an answering mode of answering two calls on a single device to an answering mode of answering two calls on a plurality of devices.

It can be understood that a form of the operation performed by the user on the second prompt region includes but is not limited to button control, touchscreen control, an edge touch, a gesture, and the like. For example, the user taps the control 11011 (as shown in FIG. 11), the control 12011 (as shown in FIG. 12), or the control 12012 (as shown in FIG. 12) to trigger the third operation instruction.

It should be noted that, according to the third operation instruction, answering a plurality of calls by a single device may be switched to answering a plurality of calls by a plurality of devices.

In an embodiment of this application, the first call may be transferred to the fourth electronic device for answering. Specifically, when the first electronic device establishes a communication connection to the fourth electronic device, according to the third operation instruction, the first electronic device receives, through the first communication link, call data sent by the second electronic device, and sends, to the fourth electronic device, the call data sent by the second electronic device; and the first electronic device receives call data sent by the fourth electronic device, and sends, to the second electronic device through the first communication link, the call data sent by the fourth electronic device.

In an embodiment of this application, the second call may be transferred to the fourth electronic device for answering. Specifically, when the first electronic device establishes a communication connection to the fourth electronic device, according to the third operation instruction, the first electronic device receives, through the second communication link, call data sent by the third electronic device, and sends, to the fourth electronic device, the call data sent by the third electronic device; and the first electronic device receives call data sent by the fourth electronic device, and sends, to the third electronic device through the second communication link, the call data sent by the fourth electronic device.

It can be understood that, in this case, for specific statuses of the first call and the second call, reference may be made to step S405 and step S406. Details are not described herein again.

It should be noted that, after answering a plurality of calls by a single device is switched to answering a plurality of calls by a plurality of devices, calls answered by different devices may be switched. To be specific, the first call or the second call originally answered by the fourth electronic device may be switched to the first electronic device for answering. For specific content, refer to the following descriptions.

It should be further noted that answering a plurality of calls by a plurality of devices may be switched to answering a plurality of calls by one device again. For specific implementation steps, refer to step S811 and step S812. Details are not described herein again.

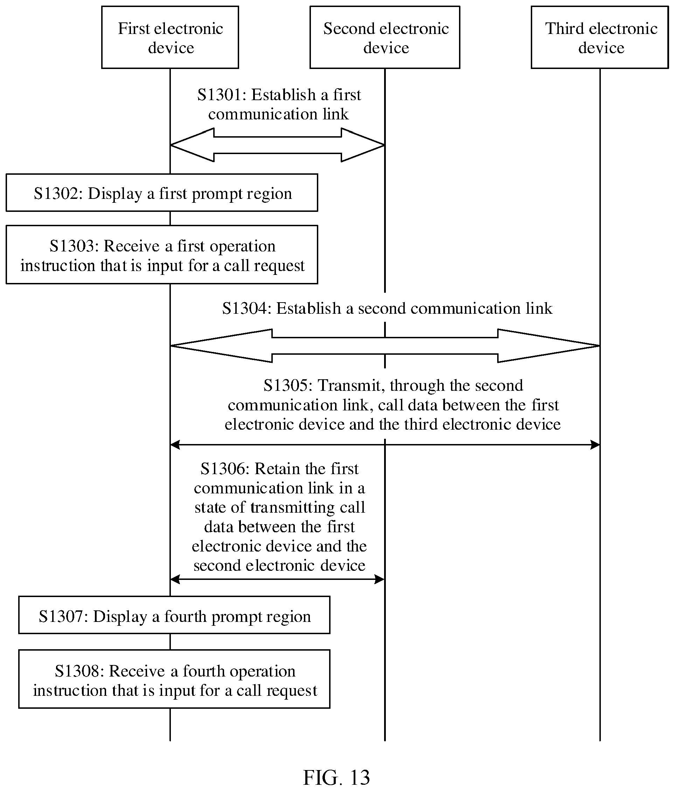

An embodiment of this application further provides a call processing method. FIG. 13 is a flowchart of another call processing method according to an embodiment of this application. The method may include the following steps.

S1301: A first electronic device establishes a first communication link to a second electronic device.

S1302: The first electronic device displays a first prompt region.

S1303: The first electronic device receives a first operation instruction that is input for a call request.

S1304: The first electronic device establishes a second communication link to a third electronic device.

S1305: The first electronic device transmits, through the second communication link, call data between the first electronic device and the third electronic device.

S1306: The first electronic device retains the first communication link in a state of transmitting call data between the first electronic device and the second electronic device.

It can be understood that, for specific content of step S1301 to step S1306, reference may be made to step S401 to step S406. Details are not described herein again.

In an embodiment of this application, the first electronic device may simultaneously answer a first call and a second call in the mode B shown in FIG. 3. In this case, the first electronic device transmits, through the second communication link, the call data between the first electronic device and the third electronic device, and retains the first communication link in a state of transmitting call data between the first electronic device and the second electronic device. Specifically, when the first electronic device establishes a communication connection to a fourth electronic device, the first electronic device receives, through the first communication link, call data sent by the second electronic device, and sends, to the fourth electronic device, the call data sent by the second electronic device; and the first electronic device receives call data sent by the fourth electronic device, and sends, to the second electronic device through the first communication link, the call data sent by the fourth electronic device. Alternatively, when the first electronic device establishes a communication connection to the fourth electronic device, the first electronic device receives, through the second communication link, call data sent by the third electronic device, and sends, to the fourth electronic device, the call data sent by the third electronic device; and the first electronic device receives call data sent by the fourth electronic device, and sends, to the third electronic device through the second communication link, the call data sent by the fourth electronic device.

It should be noted that an electronic device with a highest priority may be determined, as the fourth electronic device, based on a preset priority from at least one electronic device that establishes a communication connection to the first electronic device. It can be understood that a manner of establishing the communication connection may include but is not limited to Bluetooth, Wi-Fi, and the like.

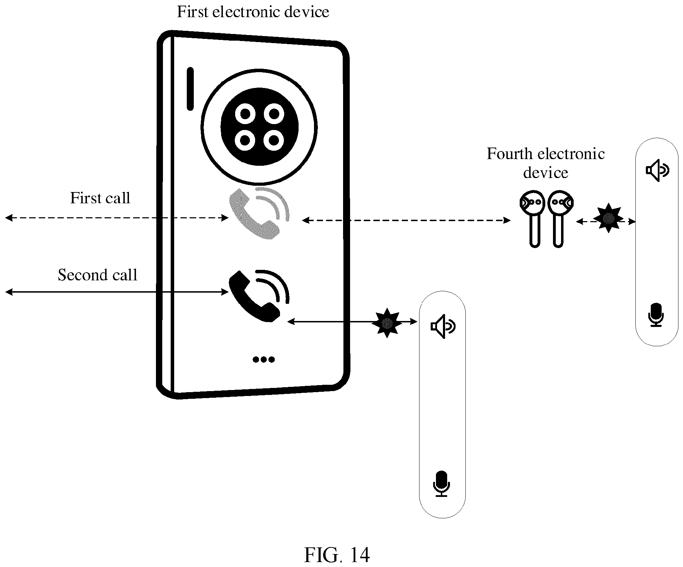

In an embodiment of this application, a headset has a highest priority. To be specific, if the at least one electronic device that establishes a communication connection to the first electronic device includes the headset, the headset is selected as the fourth electronic device. FIG. 14 is a schematic diagram of answering a plurality of calls by a plurality of devices according to an embodiment of this application. In FIG. 14, the first electronic device is a mobile phone, and the fourth electronic device is a headset. The first electronic device transfers one of two simultaneously answered calls to the headset. To be specific, one call is answered on the mobile phone, and the other call is finally answered on the headset through the mobile phone.

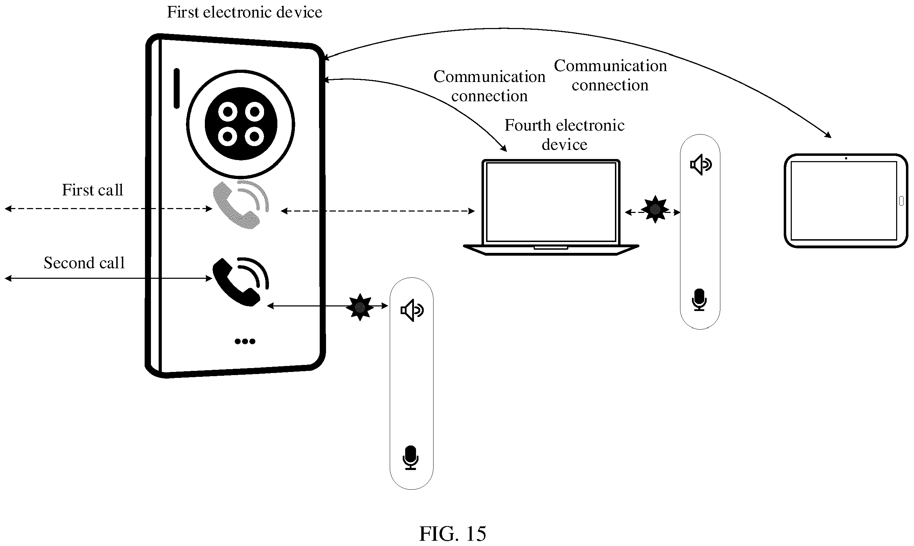

In an embodiment of this application, a priority may be set based on a distance between an electronic device and the first electronic device. For example, an electronic device closer to the first electronic device has a higher priority, and an electronic device farther away from the first electronic device has a lower priority. FIG. 15 is another schematic diagram of answering a plurality of calls by a plurality of devices according to an embodiment of this application. In FIG. 15, devices that establish communication connections to the first electronic device include a tablet computer and a PC. The tablet computer is closer to the first electronic device, and therefore has a higher a priority, and the tablet computer is selected as the fourth electronic device.

It can be understood that, during a call, the fourth electronic device that establishes a communication connection to the first electronic device may be switched according to an actual requirement. For example, the fourth electronic device is originally a headset. However, during a subsequent call, video data is to be transmitted in a call answered on the fourth electronic device, and the headset no longer meets a call requirement. The fourth electronic device may be replaced with an electronic device that meets the call requirement, for example, a tablet computer or a PC.

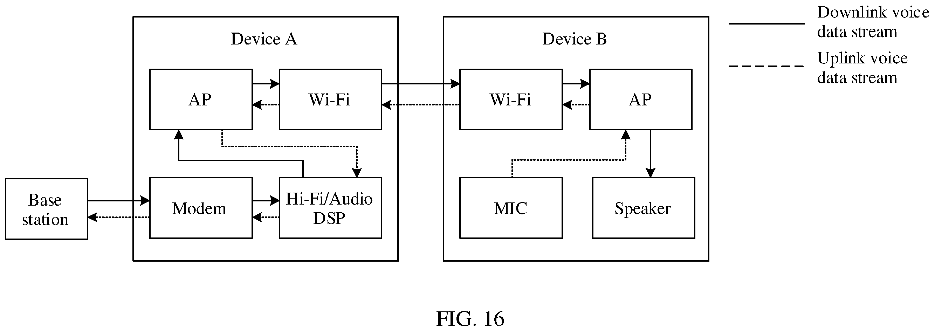

It can be learned from the foregoing content that, to enable a plurality of devices to simultaneously answer a plurality of calls, at least one of the plurality of calls may be transferred to another device for answering. FIG. 16 is a diagram of a principle of answering a plurality of calls by a plurality of devices according to an embodiment of this application. FIG. 16 includes a base station, a device A, and a device B. The device A is a device that simultaneously answers a plurality of calls. FIG. 16 shows a process of transferring a call answered by the device A to the device B. Voice data is used as an example for description. A transmission process for a downlink voice data stream is as follows: The base station transmits the downlink voice data stream to the device A through an air interface. A modem in the device A demodulates the downlink voice data stream and transmits the downlink voice data stream to a Hi-Fi/audio DSP. The Hi-Fi/audio DSP encodes/decodes the downlink voice data stream and transmits the downlink voice data stream to an AP. The AP transmits the downlink voice data stream to the device B through a Wi-Fi module in the device A. Correspondingly, a Wi-Fi module in the device B receives the downlink voice data stream and transmits the downlink voice data stream to an AP, and then the AP transmits the downlink voice data stream to a speaker (speaker) for playing. A transmission process for an uplink voice data stream is as follows: A MIC (microphone) of the device B captures voice data of a user and transmits the voice data to the AP, that is, transmits the uplink voice data stream to the AP. Then the uplink voice data stream is transmitted to the Wi-Fi module of the device A through the Wi-Fi module of the device B. The Wi-Fi module of the device A receives the uplink voice data stream, and transmits the uplink voice data stream to the AP. Then the uplink voice data stream is transmitted to the Hi-Fi/audio DSP, and then transmitted to the modem for modulation. The modem modulates the uplink voice data stream, to be specific, converts a digital signal into a pulse signal. Finally, the pulse signal is sent to the base station through the air interface.

It can be understood data transmission between the device A and the device B may alternatively be implemented by using a communication technology such as Bluetooth, or by using a cellular data service technology. This is not limited in this application.

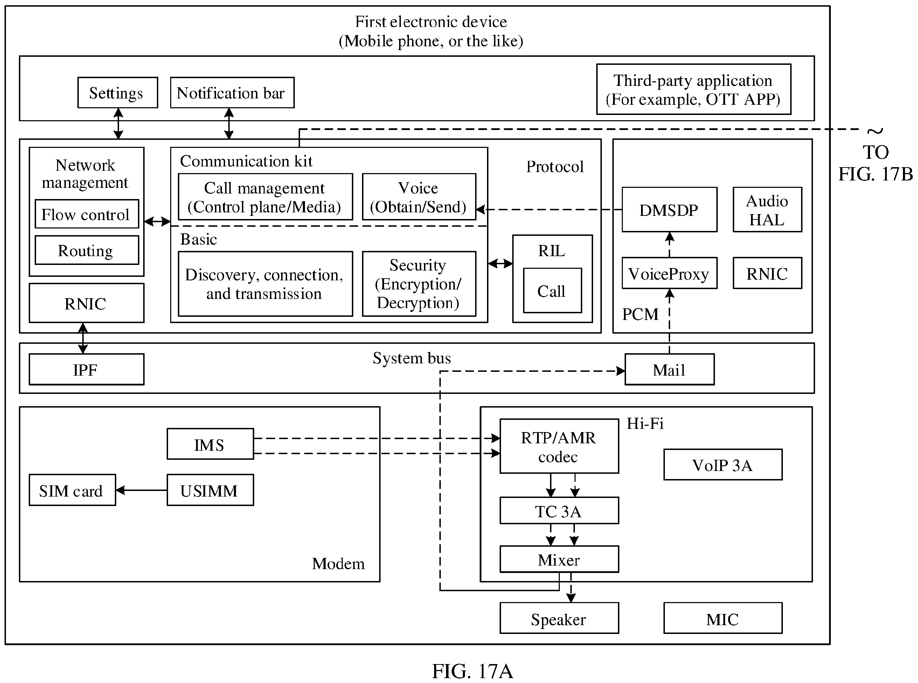

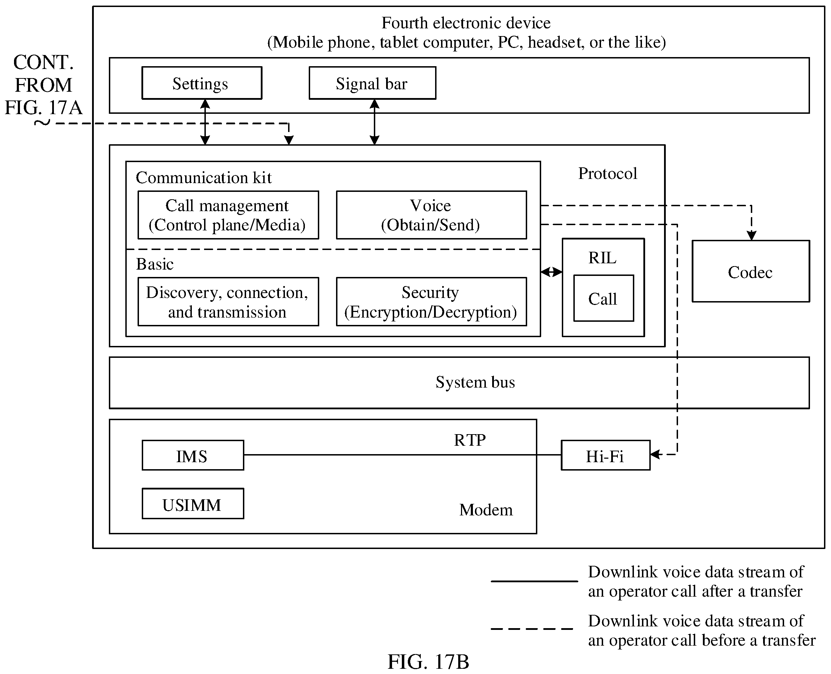

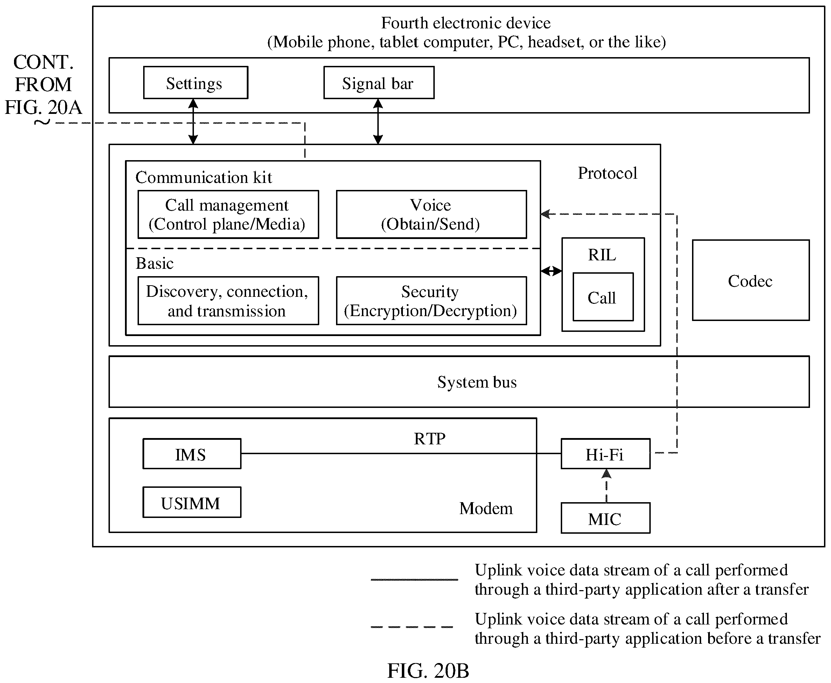

It should be noted that, a process of transferring a call performed through an operator to another device is different from a process of transferring a call performed through a third-party application to another device. This is described below by using examples with reference to FIG. 17A and FIG. 17B to FIG. 20A and FIG. 20B.

For example, FIG. 17A and FIG. 17B are a schematic diagram of a downlink data stream of an operator call according to an embodiment of this application. Voice data is used as an example. A downlink voice data stream of an operator call on the first electronic device before the operator call is transferred to the fourth electronic device is as follows: A modem in the first electronic device receives downlink voice data sent by a base station through an air interface, and transmits the downlink voice data to an RTP/AMR codec module for decoding. Then the downlink voice data is sent to a TC 3A module for noise reduction. Noise-reduced downlink voice data is mixed by a mixer, and finally played by a speaker (speaker). A downlink voice data stream of the operator call on the first electronic device after the operator call is transferred to the fourth electronic device is as follows: Downlink voice data is mixed by the mixer (for a process before the mixing, refer to the foregoing descriptions), then sent to a VoiceProxy through a mail (a mailbox), and then transmitted to a communication kit (a communication kit in the first electronic device) through a DMSDP. The communication kit implements cross-device transmission of the downlink voice data. To be specific, the communication kit of the first electronic device transmits the downlink voice data to a communication kit of the fourth electronic device. Then the fourth electronic device may directly invoke a codec interface for unified playing through VoIP, or transmit the downlink voice data to Hi-Fi for playing.

It should be noted that the communication kit is a component package for communication, and is used for multi-device management, service implementation, and the like. As shown in FIG. 17A and FIG. 17B, the communication kit may include a call management module, an audio/video module, and some basic modules. The call management module may coordinate a plurality of calls that are answered simultaneously. The voice module may obtain audio and video data and transmit audio and video data. The basic module may implement some basic functions, for example, discovering a communicable device, transmitting data, connecting to another device, encryption, and decryption. In an embodiment provided in this application, the communication kit may transmit data through a short-range technology such as Bluetooth or Wi-Fi, or a plurality of communication technologies such as a cellular data service technology. It can be understood that the communication kit shown in FIG. 17A and FIG. 17B is merely an implementation provided in this application, and the communication kit may alternatively have another form. This is not limited in this application.

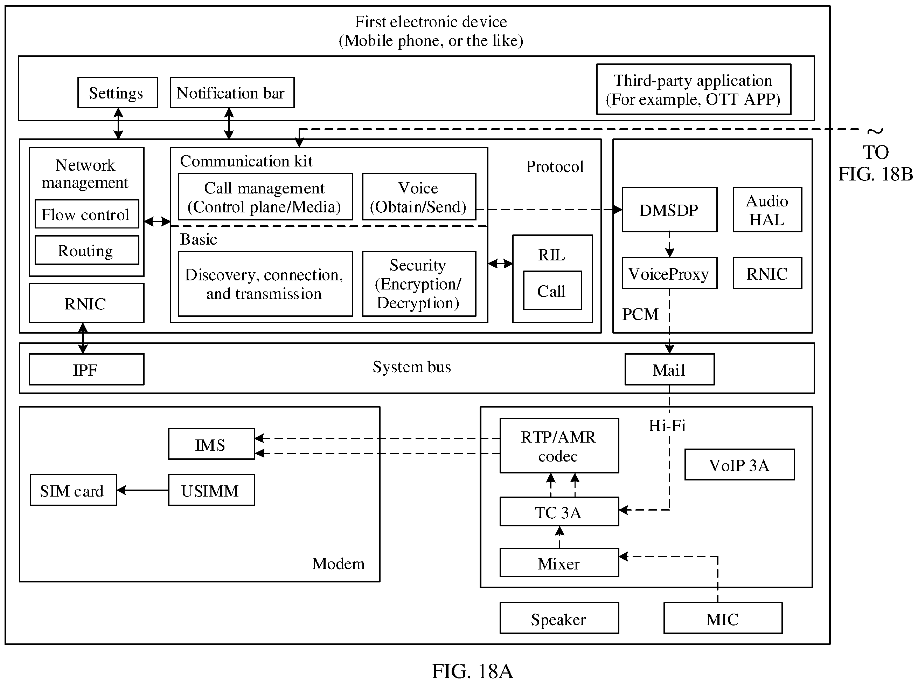

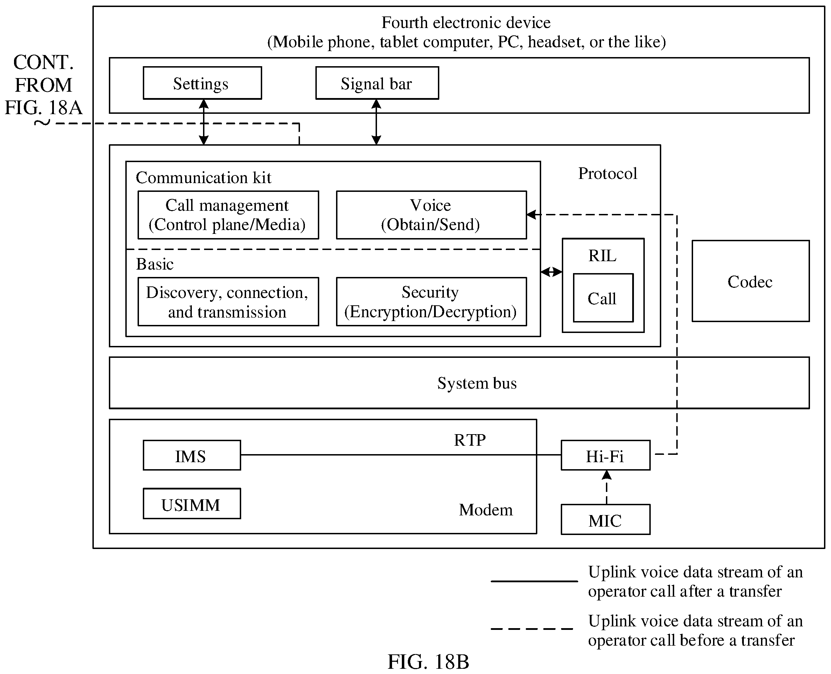

For example, FIG. 18A and FIG. 18B are a schematic diagram of an uplink data stream of an operator call according to an embodiment of this application. Voice data is used as an example. An uplink voice data stream of an operator call on a first electronic device before the operator call is transferred to the fourth electronic device is as follows: The first electronic device captures uplink voice data through a MIC. The uplink voice data is mixed by a mixer, and then processed by a TC 3 A module and an RTP/AMR codec module, and then transmitted to a modem, and finally sent by the modem to a base station through an air interface. An uplink voice data stream of the operator call on the first electronic device after the operator call is transferred to the fourth electronic device is as follows: The fourth electronic device captures uplink voice data through a MIC. The uplink voice data undergoes voice processing by a Hi-Fi module, and then transmitted to a communication kit. Similar to the process shown in FIG. 17A and FIG. 17B, the uplink voice data is transmitted by the communication kit of the fourth electronic device to a communication kit of the first electronic device, and then sequentially processed by a DMSDP module and a VoiceProxy (voice proxy) module, and then transmitted to the TC 3A module through a mail for noise reduction, and then encoded by the RTP/AMR codec module, and then transmitted to the modem, and finally sent by the modem to the base station through the air interface.

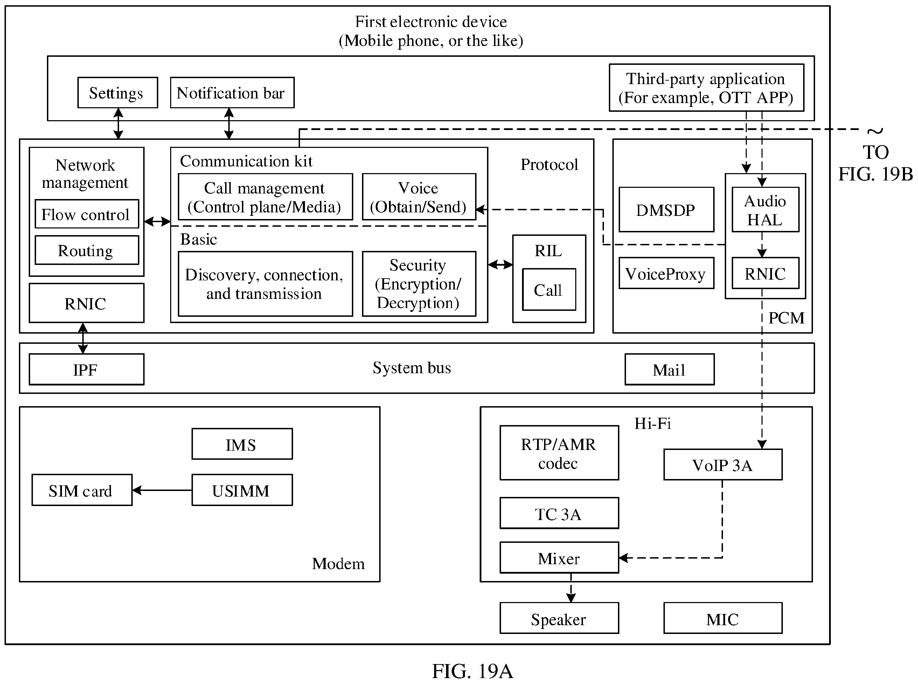

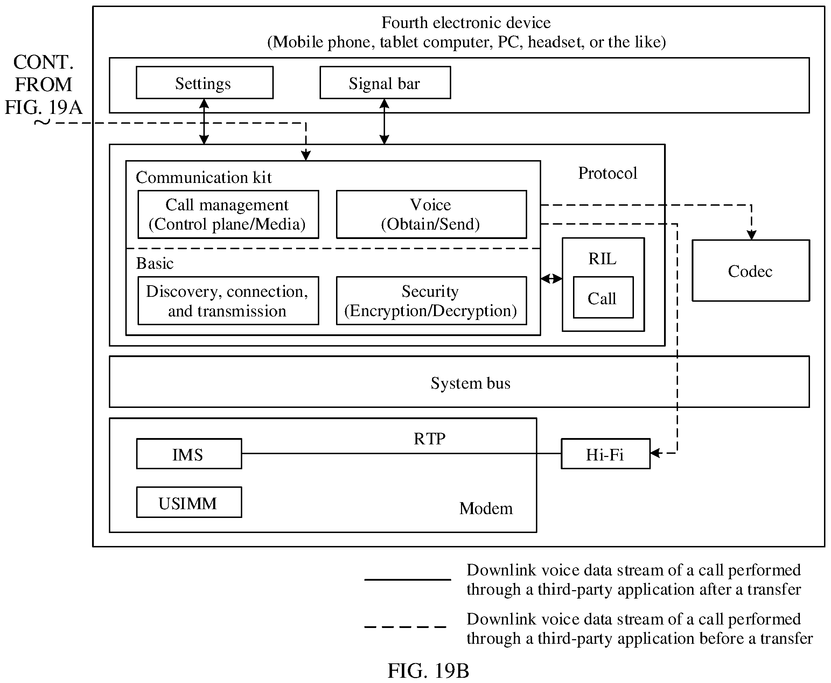

For example, FIG. 19A and FIG. 19B are a schematic diagram of a downlink data stream of a third-party call according to an embodiment of this application. Voice data is used as an example. A downlink voice data stream of a third-party call on the first electronic device before the third-party call is transferred to the fourth electronic device is as follows: A third-party application transmits downlink voice data to an audio HAL, where the audio HAL is used to invoke a voice-related driver. The downlink voice data is processed by an RNIC module and then transmitted to a VoIP 3A module for noise reduction, and then transmitted to a mixer module for audio mixing, and finally played by a speaker. A downlink voice data stream of the third-party call on the first electronic device after the third-party call is transferred to the fourth electronic device is as follows: The third-party application transmits downlink voice data to the audio HAL and/or the RNIC module. Then the downlink voice data is transmitted to the fourth electronic device through a communication kit. After receiving the downlink voice data, the fourth electronic device may directly invoke a codec interface for unified playing through VoIP, or transmit the downlink voice data to Hi-Fi for playing.

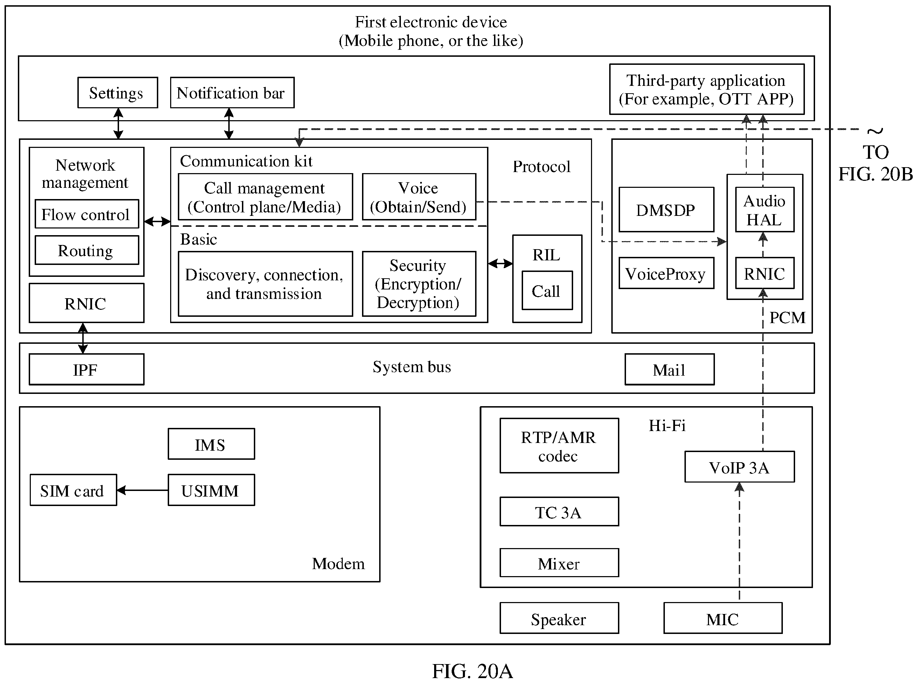

For example, FIG. 20A and FIG. 20B are a schematic diagram of an uplink data stream of a third-party call according to an embodiment of this application. Voice data is used as an example. An uplink voice data stream of a third-party call on the first electronic device before the third-party call is transferred to the fourth electronic device is as follows: The first electronic device captures uplink voice data through a MIC. The uplink voice data is processed by a VoIP 3A module, an RNIC module, and an audio HAL, and then transmitted to a third-party application, and then transmitted to a peer end of a call through the third-party application. An uplink voice data stream of the third-party call on the first electronic device after the third-party call is transferred to the fourth electronic device is as follows: The fourth electronic device captures uplink voice data through a MIC. The uplink voice data undergoes voice processing by a Hi-Fi module, and is then transmitted to the first electronic device through a communication kit. After receiving the uplink voice data, the first electronic device transmits the uplink voice data to the RNIC module and the audio HAL for processing, and then transmits the uplink voice data to the third-party application.

It should be further noted that, when the first electronic device and the fourth electronic device jointly answer a plurality of calls, a specific call to be answered by the first electronic device and the fourth electronic device needs to be determined.

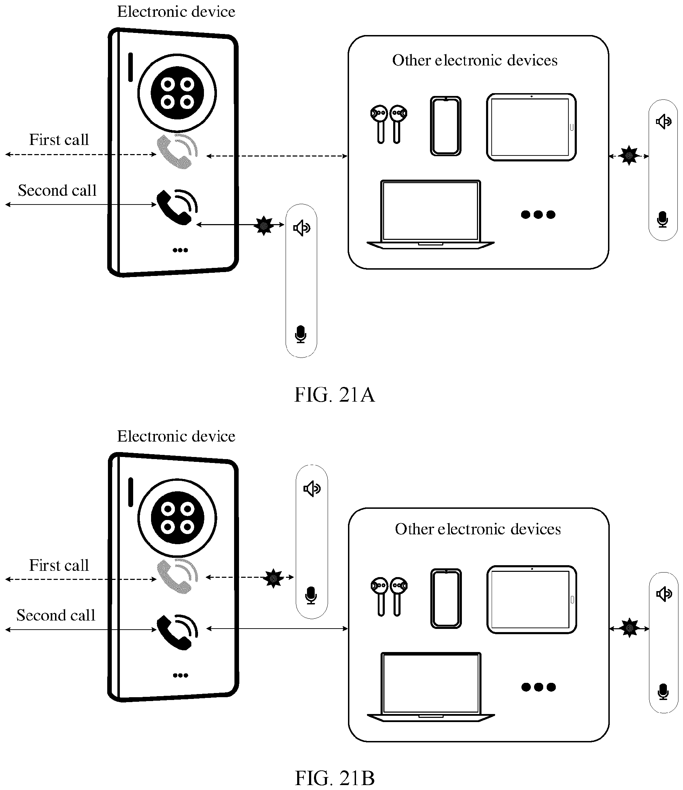

For example, FIG. 21A is a schematic diagram of answering a plurality of calls by a plurality of devices according to an embodiment of this application. An electronic device in FIG. 21A simultaneously answers at least two calls: a first call and a second call. The second call is answered on the electronic device, and the first call is transferred to another electronic device for answering. Specifically, the electronic device receives call data sent by a peer end of the first call, sends the call data to the another electronic device, receives call data sent by the another electronic device, and sends the call data to the peer end of the first call. FIG. 21B is another schematic diagram of answering a plurality of calls by a plurality of devices according to an embodiment of this application. An electronic device in FIG. 21B simultaneously answers at least two calls: a first call and a second call. The first call is answered on the electronic device, and the second call is transferred to another electronic device for answering. Specifically, the electronic device receives call data sent by a peer end of the second call, sends the call data to the another electronic device, receives call data sent by the another electronic device, and sends the call data to the peer end of the second call.

It can be understood that a specific call to be transferred to the fourth electronic device for answering is determined by the first operation instruction in step S403. When the first operation instruction indicates to answer the first call on the first electronic device and answer the second call on the fourth electronic device, the first electronic device transfers the second call to the fourth electronic device for answering; or when the first operation instruction indicates to answer the second call on the first electronic device and answer the first call on the fourth electronic device, the first electronic device transfers the first call to the fourth electronic device for answering.

For example, when a user triggers the control 603 in FIG. 6 or the control 7013 in FIG. 7, the first electronic device answers a new call (the second call), and selects another device to answer an original call (the first call); or when the user triggers the control 604 in FIG. 6 or the control 7014 in FIG. 7, the first electronic device answers an original call (the first call), and another device answers a new call (the second call). It can be understood that a manner of the triggering includes but is not limited to button triggering, touchscreen triggering, an edge touch, and gesture triggering, and the another device is another electronic device that establishes a communication connection to the first electronic device.

In an embodiment of this application, the first prompt region displayed on the first electronic device may include answering prompt information, and the answering prompt information may include a prompt and a suggestion for an answering mode, to be specific, a prompt indicating which one of two calls that a user needs to answer is suitable for being answered on the first electronic device and which one is suitable for being answered on the fourth electronic device. It can be understood that the answering prompt information may be determined based on types of the two calls. When video data is to be transmitted in a call and the fourth electronic device is a headset, a suggestion included in the answering prompt information is to suggest the user to answer the call by using the first electronic device. It should be noted that a manner of determining the answering prompt information is not limited to one of the foregoing manners, and there may be another manner. This is not limited in this application. A representation form of the answering prompt information is not limited to text, voice, a picture, and the like.

It should be noted that, after a call on the first electronic device is transferred to another electronic device for answering, another call on the first electronic device may be further transferred to another device for answering. An example in which the first electronic device simultaneously answers the first call and the second call is used for description.

Case 1: If the first electronic device has previously transferred the first call to the fourth electronic device for answering, the first electronic device may further transfer the second call to a fifth electronic device for answering. Specifically, when the first electronic device establishes a communication connection to the fifth electronic device, call data sent by the third electronic device is received through the second communication link, the call data sent by the third electronic device is sent to the fifth electronic device, call data sent by the fifth electronic device is received, and the call data sent by the fifth electronic device is sent to the third electronic device through the second communication link.

Case 2: If the first electronic device has previously transferred the second call to the fourth electronic device for answering, the first electronic device may further transfer the first call to a fifth electronic device for answering. Specifically, when the first electronic device establishes a communication connection to the fifth electronic device, call data sent by the second electronic device is received through the first communication link, the call data sent by the second electronic device is sent to the fifth electronic device, call data sent by the fifth electronic device is received, and the call data sent by the fifth electronic device is sent to the second electronic device through the first communication link.

It can be understood that a process of transferring a call to the fifth electronic device is the same as a process of transferring a call to the fourth electronic device. For details, refer to related content. Details are not described herein again.

It should be further noted that both calls answered on the first electronic device may be transferred to another device for answering. For example, the two calls on the first electronic device are transferred to a headset for answering, one of the calls is answered by a left earphone, and the other call is answered by a right earphone. S1307: The first electronic device displays a fourth prompt region.

Specifically, after the first electronic device establishes the second communication connection to the third electronic device (step S1304), the first electronic device displays the fourth prompt region, where the fourth prompt region is used to indicate a call switching request.

It can be understood that the fourth prompt region may be an entire interface, or may be a partial region including one or more controls. In an embodiment of this application, the one or more controls include one or more controls for switching a call, and a form of the one or more controls for switching a call is not limited to the following examples.

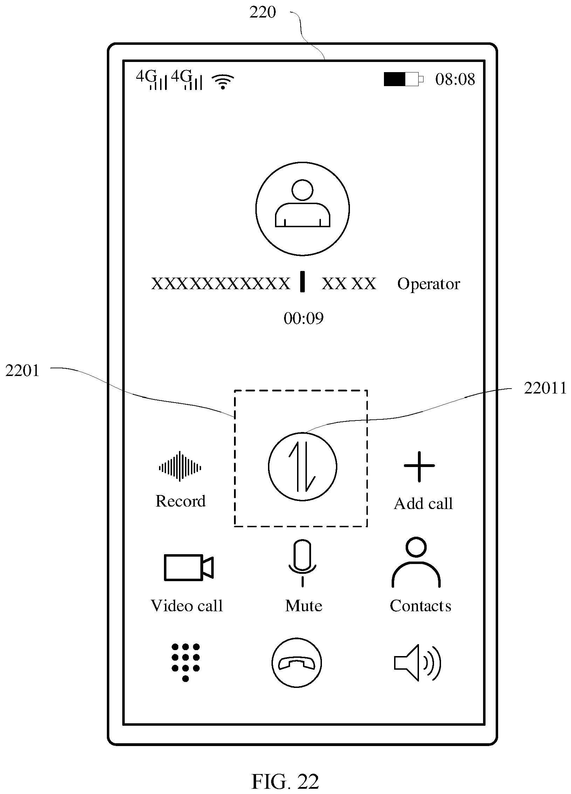

For example, FIG. 22 is a schematic diagram of a fourth prompt region according to an embodiment of this application. The fourth prompt region may be an interface 220. The interface 220 may include a control 22011, and the control 22011 is used to switch a call. Alternatively, the fourth prompt region may be a display region 2201 including the control 22011. It can be understood that the interface shown in FIG. 22 may be an interface displayed after a user triggers the control 502 shown in FIG. 5.

S1308: The first electronic device receives a fourth operation instruction that is input for the call switching.

Specifically, the first electronic device receives the fourth operation instruction that is input for the call switching request. It can be understood that the fourth operation instruction may be an instruction triggered by an operation performed by a user on the fourth prompt region, and the fourth operation instruction is used to switch calls answered on different devices. For example, if the first electronic device answers the first call and the fourth electronic device answers the second call, the fourth operation instruction enables the first electronic device to answer the second call, and the fourth electronic device to answer the first call.

It can be understood that, before receiving the fourth operation instruction, if the first electronic device sends, to the fourth electronic device, call data sent by the second electronic device, that is, the first electronic device transfers the first call to the fourth electronic device for answering, after receiving the fourth operation instruction, in response to the fourth operation instruction, the first electronic device receives call data sent by the fourth electronic device, and switches and sends, to the third electronic device through the second communication link, the call data sent by the fourth electronic device; and the first electronic device stops sending, to the fourth electronic device, call data sent by the second electronic device, and sends, to the fourth electronic device, call data that is sent by the third electronic device and that is received through the second communication link, that is, the first electronic device transfers the second call to the fourth electronic device for listening. Before receiving the fourth operation instruction, if the first electronic device sends, to the fourth electronic device, call data sent by the third electronic device, that is, the first electronic device transfers the second call to the fourth electronic device for listening, after receiving the fourth operation instruction, in response to the fourth operation instruction, the first electronic device receives call data sent by the fourth electronic device, and sends, to the second electronic device through the first communication link, the call data sent by the fourth electronic device; and the first electronic device stops sending, to the fourth electronic device, call data sent by the third electronic device, and sends, to the fourth electronic device, call data that is sent by the second electronic device and that is received through the first communication link, that is, the first electronic device transfers the first call to the fourth electronic device for answering.

It should be noted that the call processing methods shown in FIG. 4, FIG. 8A and FIG. 8B, and FIG. 18A and FIG. 18B all have a same problem: When the first electronic device simultaneously answers two calls, if both calls are normally answered, to be specific, sending/receiving attributes of the first electronic device for both the first call and the second call are "active", and the first electronic device normally plays voice (and/or videos, and/or the like) of both calls, crosstalk mentioned above may occur, affecting call quality.

Therefore, to avoid impact of crosstalk, the two calls may not be simultaneously in normally answered states (refer to step S405 and step S406). Specifically, the foregoing effect may be achieved by changing the sending/receiving attribute of the first electronic device, as shown in Table 1 below.

**Table 1**

| | First call | Second call |
|---|---|---|
| Answered by a same device (for example, answered by the first electronic device) | inactive | active |
| Answered by a plurality of devices (for example, answered by the first electronic device and the fourth electronic device) | active (first electronic device) | active (fourth electronic device) |
| | active (first electronic device) | recvonly (fourth electronic device) |
| | recvonly (first electronic device) | active (fourth electronic device) |
| | active (first electronic device) | inactive (fourth electronic device) |
| | inactive (first electronic device) | active (fourth electronic device) |
| | active (fourth electronic device) | active (first electronic device) |
| | recvonly (fourth electronic device) | active (first electronic device) |
| | active (fourth electronic device) | recvonly (first electronic device) |
| | inactive (fourth electronic device) | active (first electronic device) |
| | active (fourth electronic device) | inactive (first electronic device) |

When the first electronic device simultaneously answers two calls (refer to step S404 to step S406), a sending/receiving attribute of the first electronic device that corresponds to one of the two calls may be changed to "inactive", and a sending/receiving attribute of the first electronic device that corresponds to the other call is still "active". In this case, the first electronic device does not receive data sent by a peer end of the changed call, and does not send data of a local end to the peer end of the changed call. This avoids crosstalk that may be caused by simultaneously answering two calls.

When the first electronic device answers a call and the fourth electronic device also answers a call, sending/receiving attributes of the first electronic device that correspond to the two calls may be both "active". For example, two persons use the two electronic devices to answer the two calls, and in this case, crosstalk is unlikely to occur. A sending/receiving attribute of the first electronic device that corresponds to one of the two calls may be changed to "recvonly", and a sending/receiving attribute of the first electronic device that corresponds to the other call is still "active". In this case, the first electronic device does not send data of a local end to a peer end of the changed call, but still receives data sent by the peer end of the changed call. Alternatively, a sending/receiving attribute of the first electronic device that corresponds to one of the two calls may be changed to "inactive", and a sending/receiving attribute of the first electronic device that corresponds to the other call is still "active". Refer to the foregoing content. Details are not described herein again.

Specifically, the sending/receiving attribute may be changed in the following two manners.

In a first manner, a setting item of the first electronic device is changed or added to change a sending/receiving attribute of the first electronic device.

In an embodiment of this application, a sending/receiving attribute corresponding to a case in which the first electronic device answers two (or more) calls may be preset, or a user may subsequently change a corresponding setting item to change a preset sending/receiving attribute. It can be understood that the setting item includes a plurality of settings related to a plurality of functions of an electronic device, and may be understood as a system setting item on the electronic device.

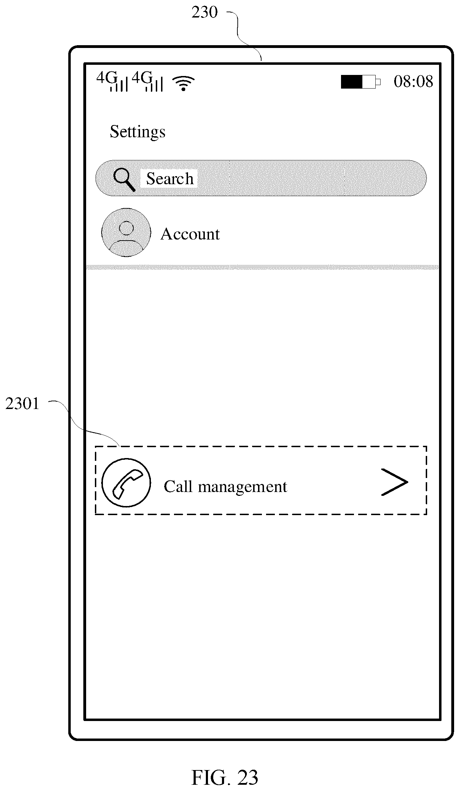

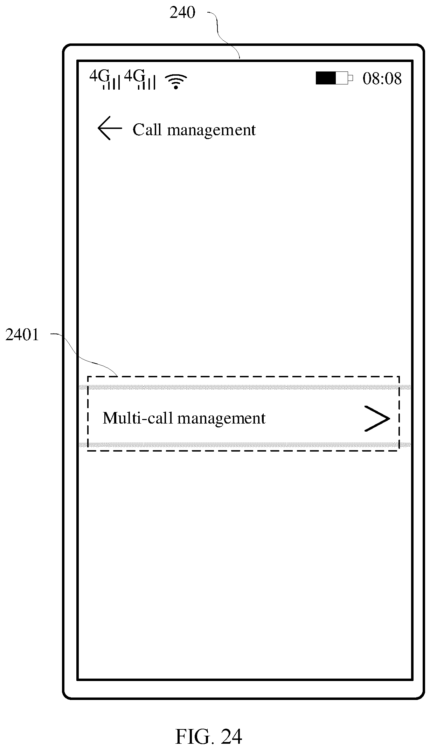

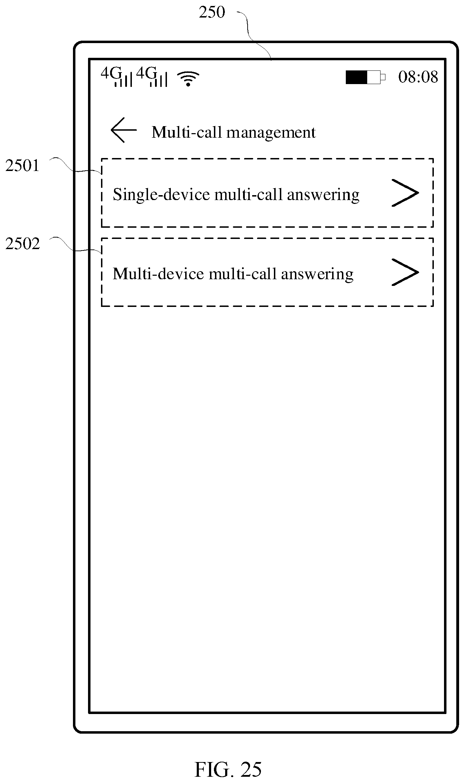

For example, FIG. 23 is a schematic diagram of a user interface according to an embodiment of this application. An electronic device displays a settings interface 230, and the settings interface 230 may include a call management control 2301. In response to an operation performed by a user on the call management control 2301 (for example, the call management control 2301 is touched or tapped), the electronic device displays a call management interface 240 (as shown in FIG. 24), and the call management interface 240 may include a multi-call management control 2401. In response to an operation performed by a user on the multi-call management control 2401 (for example, the call management control 2401 is touched or tapped), the electronic device displays a multi-call management interface 250 (as shown in FIG. 25), and the multi-call management interface 250 may include a control 2501 and a control 2502. The control 2501 is configured to trigger display of a single-device multi-call answering interface. The control 2502 is configured to trigger a multi-device multi-call answering interface.

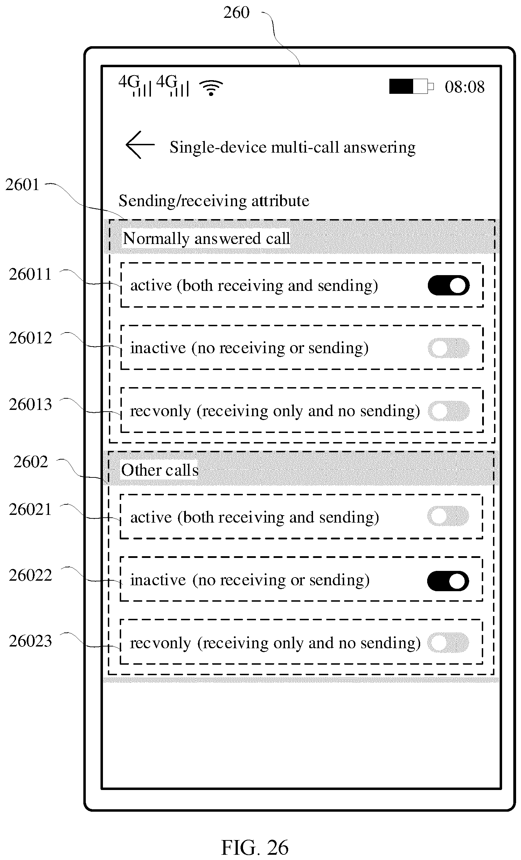

In response to an operation performed by a user on the control 2501 (for example, the call management control 2501 is touched or tapped), the electronic device displays the single-device multi-call answering interface 260 (as shown in FIG. 26). The single-device multi-call answering interface 260 includes a display region 2601 and a display region 2602. The display region 2601 is used to display a sending/receiving attribute of a normally answered call corresponding to the electronic device, and the display region 2601 includes a control 26011, a control 26012, and a control 26013. In response to an operation performed by a user on the control 26011, the control 26012, and the control 26013, the sending/receiving attribute of the normally answered call corresponding to the electronic device changes correspondingly. The display region 2602 is used to display a sending/receiving attribute of another call corresponding to the electronic device, and the display region 2602 includes a control 26021, a control 26022, and a control 26023. In response to an operation performed by a user on the control 26021, the control 26022, and the control 26023, the receiving/sending attribute of the another call corresponding to the electronic device changes correspondingly.

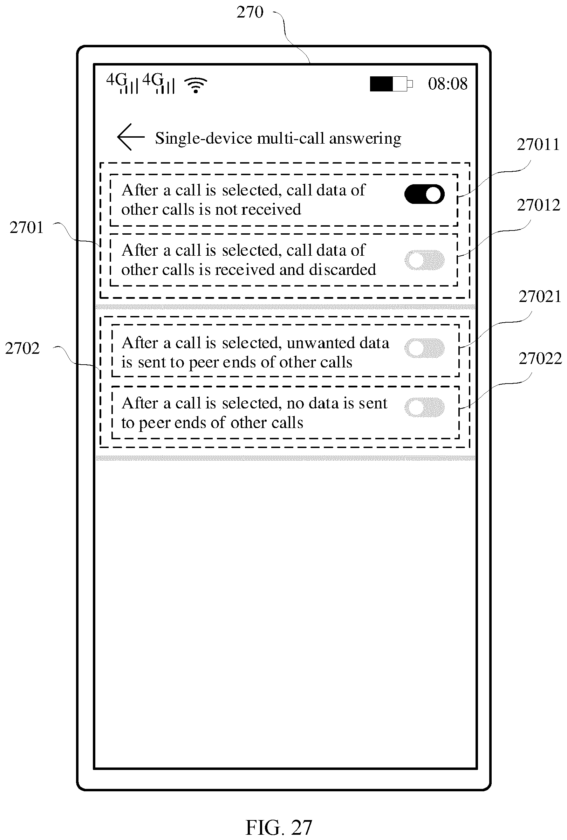

It can be understood that the single-device multi-call answering interface may further have another representation form, for example, a single-device multi-call answering interface 270 shown in FIG. 27. The single-device multi-call answering interface 270 includes a display region 2701 and a display region 2702. The display region 2701 is used to display a case in which the electronic device receives data of another call except a normally answered call. The display region 2701 includes a control 27011 and a control 27012. The control 27011 is used to trigger the electronic device to skip receiving call data sent by a peer end of the another call. The control 27012 is configured to trigger the electronic device to receive and discard call data sent by the peer end of the another call. The display region 2702 is configured to display a case in which the electronic device sends data to the peer end of the another call. The display region 2702 includes a control 27021 and a control 27022. The control 27021 is configured to control the electronic device to send unwanted data to the peer end of the another call. The control 27022 is configured to control the electronic device to send data to the peer end of the another call.

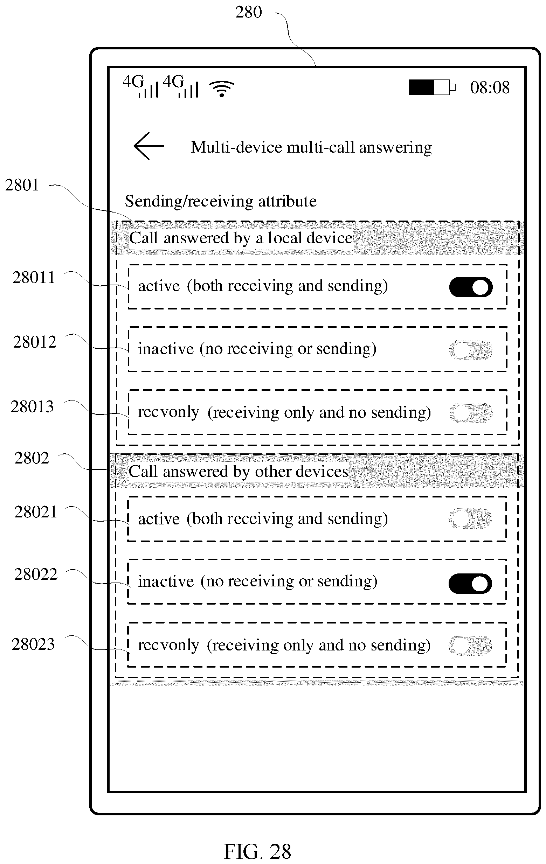

In response to an operation performed by a user on the control 2502 (for example, the call management control 2502 is touched or tapped), the electronic device displays a multi-device multi-call answering interface 280 (as shown in FIG. 28). The multi-device multi-call answering interface 280 includes a display region 2801 and a display region 2802. The display region 2801 is used to display a sending/receiving attribute corresponding to a call answered by a local device (the electronic device). The display region 2801 includes a control 28011, a control 28012, and a control 28013. In response to an operation performed by a user on the control 28011, the control 28012, and the control 28013, the sending/receiving attribute corresponding to the call answered by the local device changes correspondingly. The display region 2802 is used to display a sending/receiving attribute corresponding to a call answered by another electronic device. The display region 2802 includes a control 28021, a control 28022, and a control 28023. In response to an operation performed by a user on the control 28021, the control 28022, and the control 28023, the sending/receiving attribute corresponding to the call answered by the another device changes correspondingly.

It can be understood that the single-device multi-call answering interface and the multi-device multi-call answering interface may alternatively have other representation forms. This is not limited in this application.

In a second manner, an instruction for changing a sending/receiving attribute is sent to a network side to change a sending/receiving attribute of the first electronic device, where the instruction for changing a sending/receiving attribute is used to change a data transmission attribute of the first electronic device. It can be understood that the changing a data transmission attribute of the first electronic device may include changing a sending/receiving attribute of the first electronic device. For example, the instruction for changing a sending/receiving attribute includes changing a sending/receiving attribute of the first electronic device from "sendrecv" to "inactive". In this case, data is still transmitted between the first electronic device and another device; however, when data is transmitted to the first electronic device, the first electronic device does not receive data or send data. The changing a data transmission attribute of the first electronic device may alternatively include changing data transmission from the network side to the first electronic device. For example, the instruction for changing a sending/receiving attribute includes changing a sending/receiving attribute of the first electronic device from "sendrecv" to "recvonly". When the first electronic device transmits data to the network side, the network side does not receive, or receives and discards the data transmitted by the first electronic device. In this case, the first electronic device cannot send data to another device, and when another device sends data to the first electronic device, the network side may transmit the data to the first electronic device. In this case, the first electronic device may receive data sent by another device. In an embodiment of this application, the data mentioned above is wanted data (for example, voice data or video data of both parties) of call data, and does not include unwanted data (for example, a silence frame or RTCP data) of the call data. In addition, for specific descriptions of the sending/receiving attribute, refer to the foregoing descriptions. Details are not described herein again.

For example, if both calls are calls performed based on one SIM card, when a second call is answered, the first electronic device sends a call hold instruction to the network side to initiate a call hold process, the first call is in a call hold state, and a ring back tone is played for a second electronic device (a peer end of the first call). The first electronic device may send the call hold instruction together with an instruction for changing a sending/receiving attribute to the network side. For example, a field for the call hold instruction may be added, where the added field is used to indicate a change (variation) of a sending/receiving attribute. After receiving the call hold instruction and the instruction for changing a sending/receiving attribute, the network side changes a sending/receiving attribute of the first electronic device, and does not send an instruction for playing a ring back tone to the second electronic device. Alternatively, the first electronic device may separately send the call hold instruction and the instruction for changing a sending/receiving attribute to the network side. After receiving the instruction for changing a sending/receiving attribute, the network side changes a data transmission attribute of the first electronic device, and no longer sends an instruction for playing a ring back tone to the second electronic device.

An embodiment of this application provides a call processing scenario. All the call processing methods shown in FIG. 4, FIG. 8A and FIG. 8B, and FIG. 18A and FIG. 18B may be applied to the scenario. Description is provided below with reference to Table 2.

**Table 2**

| Multi-call | Call processing scenario | Detailed description |
|---|---|---|
| Two calls | Both calls are operator calls (calls performed through an operator). | Both calls are active. |
| | | One call is active, and one call is recvonly. |
| | Single card and two channels (one SIM card and two calls) | One call is active, and one call is inactive. |
| | Both calls are operator calls. | Both calls are active. |
| | Dual cards and two channels (two SIM cards and two calls) | One call is active, and one call is recvonly. |
| | | One call is active, and one call is held. |
| | One call is an operator call (a call performed through an operator), and | Both calls are active. |
| | | One call is active, and one call is recvonly. |
| | | One call is active, and one call is inactive. |
| | one call is a third-party call (a call performed through a third-party application). | A call performed through an operator is held, and |
| | | a call performed through a third-party application is active. |
| | Both calls are third-party calls (calls performed through a third-party application). | Both calls are active. |
| | | One call is active, and one call is recvonly. |
| | | One call is active, and one call is inactive. |
| Three or more calls | An operator call (a call performed through an operator) may be included, and | All the plurality of calls are active. |
| | | One call is active, and other calls are recvonly or inactive. |
| | a third-party application call (a call performed through a third-party application) may also be included. | Some calls are active, and some calls are recvonly or inactive. |
| | | Some calls are active, some calls are held, and some calls are recvonly or inactive. |

It can be understood that a call answered by the first electronic device may be a call performed through an operator, or may be a call performed through a third-party application. Therefore, there are a plurality of scenarios shown in Table 2.

Scenario 1: Two operator calls (the two calls are calls performed based on a same SIM card) are simultaneously answered.

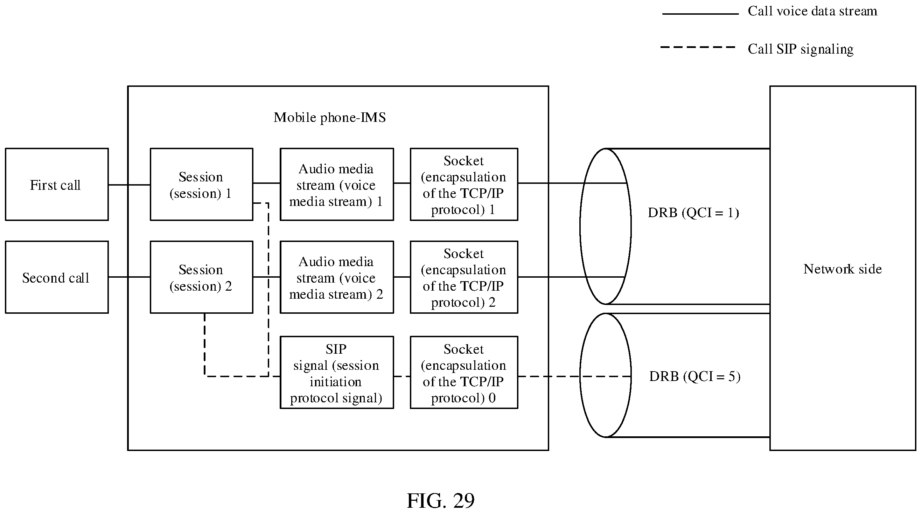

FIG. 29 is a diagram of a principle of simultaneously answering two calls according to an embodiment of this application. According to a related 3GPP protocol, one call corresponds to one session (session), and one session corresponds to at least one media stream (media stream). On a protocol stack side, each media stream has a corresponding socket. In FIG. 29, a first call corresponds to a session 1, the session 1 corresponds to an audio media stream 1 (a voice media stream 1), a second call corresponds to a session 2, and the session 2 corresponds to an audio media stream 2 (a voice media stream 2). The audio media stream 1 and the audio media stream 2 are both voice media streams, and therefore both correspond to a QCI 1 (QCI = 1, indicating a voice bearer). Therefore, two calls may run on one QCI. SIP signaling of a first call and a second call corresponds to another QCI (QCI = 5, indicating an IMS signaling bearer).

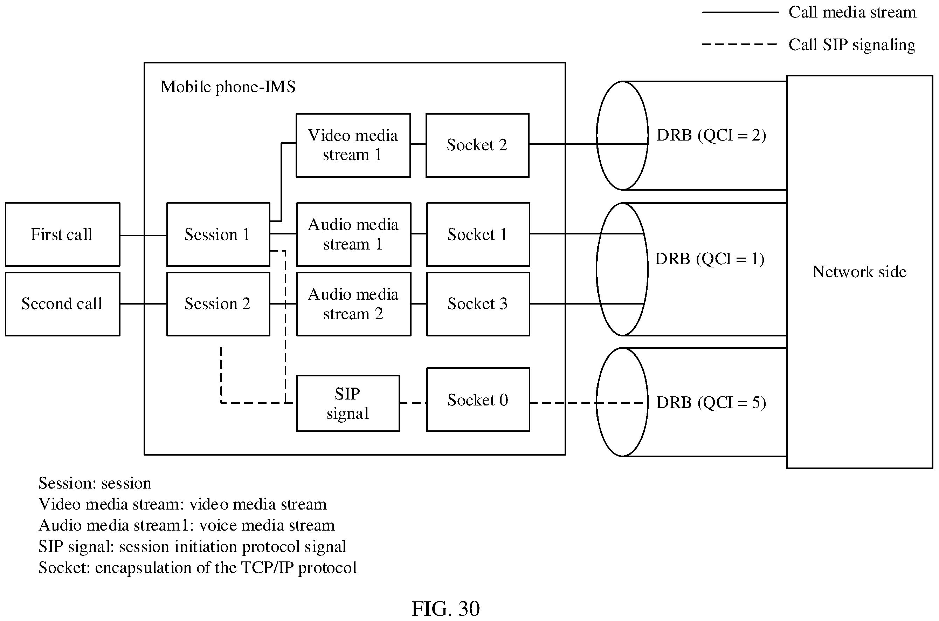

FIG. 30 is a diagram of another principle of simultaneously answering two calls according to an embodiment of this application. According to a related 3GPP protocol, one call corresponds to one session (session), and one session corresponds to at least one media stream (media stream). On a protocol stack side, each media stream has a corresponding socket. In FIG. 30, a first call is a video call, the first call corresponds to a session 1, and the session 1 corresponds to an audio media stream 1 (a voice media stream 1) and a video media stream 1 (video media stream 1); and a second call is a voice call, the second call corresponds to a session 2, and the session 2 corresponds to an audio media stream 2 (a voice media stream 2). The audio media stream 1 and the audio media stream 2 are both voice media streams, and therefore both correspond to a QCI 1 (QCI = 1, indicating a voice bearer). Therefore, two calls may run on one QCI. The video media stream 1 of the first call corresponds to a QCI 2 (QCI = 2, indicating a video bearer). SIP signaling of the first call and the second call corresponds to another QCI (QCI = 5, indicating an IMS signaling bearer).

In short, according to a related 3GPP protocol, a plurality of media streams are allowed to be created for different SIP calls in a same PDU context environment, that is, the first electronic device is allowed to simultaneously answer two calls that are performed through an operator.

In addition, for a direction of a data stream in a process of transferring a call to another device, refer to content shown in FIG. 11 to FIG. 15. Details are not described herein again.

Scenario 2: Two operator calls (the two calls are calls respectively performed based on two SIM cards) are simultaneously answered.

It can be understood that, for a process of transferring a call to another device in the scenario 2 and a direction of a data stream in the process, reference may be made to the content shown in the scenario 1 and FIG. 11 to FIG. 15. Details are not described herein again.

In an embodiment of this application, one of the two calls performed based on the two SIM cards may be set to be in a call hold state. Specifically, the first electronic device may send a call hold instruction to the network side to achieve the foregoing effect.

Scenario 3: One operator call and one third-party call are simultaneously answered.

It can be understood that a call performed through an operator and a call performed through a third-party application are independent of each other. In an embodiment of this application, the call management module in the communication kit shown in FIG. 12 to FIG. 15 is used to adjust the two calls, so that an electronic device can simultaneously answer the two calls.

In an embodiment of this application, the operator call may be set to be in a call hold state, and the third-party call is normally answered. Specifically, the first electronic device may send a call hold instruction to the network side to achieve the foregoing effect.

Scenario 4: Two third-party calls are simultaneously answered.

It can be understood that different calls performed through a third-party application are also independent of each other. Similar to the scenario 3, in an embodiment of this application, the call management module in the communication kit shown in FIG. 12 to FIG. 15 is used to adjust the different calls, so that an electronic device can simultaneously answer a plurality of calls performed through the third-party application.

Scenario 5: Three or more calls are simultaneously answered.

It can be understood that, for related descriptions of the scenario 5, reference may be made to the descriptions of the scenario 1 to the scenario 4. Details are not described herein again.

It should be noted that, for descriptions of the sending/receiving attribute in the foregoing scenarios, reference may be made to related content in Table 1. Details are not described herein again.

## Claims

1. A call processing method, applied to a first electronic device, wherein the method comprises:
establishing a first communication link to a second electronic device, and transmitting call data between the first electronic device and the second electronic device through the first communication link;
displaying a first prompt region, wherein the first prompt region is used to indicate a call request of a third electronic device;
receiving a first operation instruction that is input for the call request, and establishing a second communication link to the third electronic device according to the first operation instruction; and
transmitting call data between the first electronic device and the third electronic device through the second communication link, and retaining the first communication link in a state of transmitting call data between the first electronic device and the second electronic device.

2. The method according to claim 1, wherein after the establishing a second communication link to the third electronic device according to the first operation instruction, the method further comprises:
displaying a second prompt region, wherein the second prompt region is used to indicate a call switching request;
receiving a second operation instruction that is input for the call switching request; and
according to the second operation instruction, transmitting call data between the first electronic device and the second electronic device through the first communication link, and retaining the second communication link in a state of transmitting call data between the first electronic device and the third electronic device.

3. The method according to claim 1 or 2, wherein after the establishing a second communication link to the third electronic device, the method further comprises:
displaying a third prompt region, wherein the third prompt region is used to indicate a request for switching a call answering mode;
receiving a third operation instruction that is input for the request for switching a call answering mode; and
when a communication connection to a fourth electronic device is established, according to the third operation instruction, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; or
when a communication connection to a fourth electronic device is established, according to the third operation instruction, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

4. The method according to claim 1, wherein the transmitting call data between the first electronic device and the third electronic device through the second communication link, and retaining the first communication link in a state of transmitting call data between the first electronic device and the second electronic device comprises:
when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device; and when a communication connection to a fifth electronic device is established, receiving, through the second communication link, call data sent by the third electronic device, sending, to the fifth electronic device, the call data sent by the third electronic device, receiving call data sent by the fifth electronic device, and sending, to the third electronic device through the second communication link, the call data sent by the fifth electronic device; or
when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device; and when a communication connection to a fifth electronic device is established, receiving, through the first communication link, call data sent by the second electronic device, sending, to the fifth electronic device, the call data sent by the second electronic device, receiving call data sent by the fifth electronic device, and sending, to the second electronic device through the first communication link, the call data sent by the fifth electronic device.

5. The method according to claim 1, wherein the retaining the first communication link in a state of transmitting call data between the first electronic device and the second electronic device comprises:
when a communication connection to a fourth electronic device is established, receiving, through the first communication link, call data sent by the second electronic device, sending, to the fourth electronic device, the call data sent by the second electronic device, receiving call data sent by the fourth electronic device, and sending, to the second electronic device through the first communication link, the call data sent by the fourth electronic device.

6. The method according to claim 1, wherein the transmitting call data between the first electronic device and the third electronic device through the second communication link comprises:
when a communication connection to a fourth electronic device is established, receiving, through the second communication link, call data sent by the third electronic device, sending, to the fourth electronic device, the call data sent by the third electronic device, receiving call data sent by the fourth electronic device, and sending, to the third electronic device through the second communication link, the call data sent by the fourth electronic device.

7. The method according to claim 3 or 5, wherein after the sending, to the second electronic device through the first communication link, the call data sent by the fourth electronic device, the method further comprises:
displaying a fourth prompt region, wherein the fourth prompt region is used to indicate a call switching request;
receiving a fourth operation instruction that is input for the call switching request; and
in response to the fourth operation instruction, switching and sending, to the third electronic device through the second communication link, the call data sent by the fourth electronic device, stopping sending, to the fourth electronic device, the call data sent by the second electronic device, and sending, to the fourth electronic device, the call data that is sent by the third electronic device and that is received through the second communication link.

8. The method according to claim 3 or 6, wherein after the sending, to the third electronic device through the second communication link, the call data sent by the fourth electronic device, the method further comprises:
displaying a fourth prompt region, wherein the fourth prompt region is used to indicate a call switching request;
receiving a fourth operation instruction that is input for the call switching request; and
in response to the fourth operation instruction, switching and sending, to the second electronic device through the first communication link, the call data sent by the fourth electronic device, stopping sending, to the fourth electronic device, the call data sent by the third electronic device, and sending, to the fourth electronic device, the call data that is sent by the second electronic device and that is received through the first communication link.

9. The method according to any one of claims 3 to 8, wherein the method further comprises:
determining, based on a preset priority from at least one electronic device that establishes a communication connection to the first electronic device, an electronic device with a highest priority as the fourth electronic device.

10. The method according to any one of claims 1 to 9, wherein the first communication link is used to implement a call performed through an operator, and the second communication link is used to implement a call performed through a third-party application; or the first communication link is used to implement a call performed through a third-party application, and the second communication link is used to implement a call performed through an operator.

11. An electronic device, wherein the electronic device comprises a memory and one or more processors, the memory is coupled to the one or more processors, the memory is configured to store computer program code, the computer program code comprises computer instructions, and the one or more processors are configured to invoke the computer instructions, so that the electronic device performs the method according to any one of claims 1 to 10.

12. A computer storage medium, comprising computer instructions, wherein when the computer instructions are run on an electronic device, the electronic device is enabled to perform the method according to any one of claims 1 to 10.
